# EUROPÄISCHE PATENTSCHRIFT

(11) **EP 2 427 263 B1**
(45) Veröffentlichungstag und Bekanntmachung des Hinweises auf die Patenterteilung: **10.12.2014**
(21) Anmeldenummer: 10720265.7
(22) Anmeldetag: 03.05.2010
(51) Int. Cl.: B01D 61/36, B01D 63/08, B01D 65/00

(54) **MODULARES STRÖMUNGSSYSTEM**
MODULAR FLOW SYSTEM
SYSTÈME D'ÉCOULEMENT MODULAIRE

(30) Priorität: 06.05.2009 DE 102009020128
(43) Veröffentlichungstag der Anmeldung: 14.03.2012
(73) Patentinhaber: Heinzl, Wolfgang, 83561 Ramerberg (DE)
(72) Erfinder: KRELLE, Juergen, 81371 München (DE)
(74) Vertreter: Manitz, Gerhart
(86) Internationale Anmeldenummer: PCT/EP2010/002689
(87) Internationale Veröffentlichungsnummer: WO 2010/127818

(56) Entgegenhaltungen:
- EP-A2- 1 844 846
- DE-A1- 3 816 434
- DE-A1- 19 617 396

## Beschreibung

Die Erfindung betrifft ein modulares Strömungssystem mit einer Mehrzahl von Rahmenelementen.

Aus der DE 196 17 396 A ist bereits ein eine Mehrzahl von Plattenelementen umfassendes Strömungsmodul bekannt, bei dem die verschiedenen Plattenelemente über Dichtungen aneinander gefügt werden und der erhaltene Stapel dann verschraubt werden muss, um den nötigen Dichtdruck aufzubringen. Hierbei ist nicht nur das Verschrauben des Stapels, sondern auch das Zusammensetzen der Plattenelemente zu einem Stapel relativ aufwendig.

Der Erfindung liegt die Aufgabe zugrunde, ein verbessertes modulares Strömungssystem der eingangs genannten Art zu schaffen, bei dem die genannten Nachteile beseitigt sind. Dabei soll das Strömungssystem auf einfache und zuverlässige Art und Weise möglichst vielseitig, d.h. insbesondere zur Bildung einer möglichst großen Anzahl unterschiedlicher Funktionseinheiten einsetzbar sein.

Erfindungsgemäß wird diese Aufgabe gelöst durch ein modulares Strömungssystem mit einer Mehrzahl von Rahmenelementen, die zur Bildung unterschiedlicher Funktionseinheiten wie insbesondere einer Membrandestillationsstufe, eines Dampferzeugers, eines Kondensators, eines Wärmetauschers, eines Filters und/oder einer Pervaporationsstufe über Schweißstegstrukturen zu unterschiedlichen, jeweils wenigstens zwei, insbesondere jeweils wenigstens zehn Rahmenelemente umfassenden Stapeln zusammenfassbar sind, wobei die Rahmenelemente jeweils einen mit Durchlassöffnungen und Dampf- und/oder Fluidkanälen versehenen äußeren Rahmen und einen vom äußeren Rahmen umschlossenen zentralen Innenbereich umfassen und beidseitig jeweils mit einer Schweißstegstruktur versehen sind, die einerseits einen die Durchlassöffnungen sowie den zentralen Innenbereich umfassenden Bereich und andererseits zumindest zwei jeweils einen Dampf- und/oder Fluidkanal umfassende Bereiche abgrenzt.

Bei der Membrandestillationsstufe kann es sich insbesondere um eine Stufe eines Multieffekt-Membrandestillationsverfahrens oder -vorrichtung handelt, wie sie in der WO 2007/054311 beschrieben sind, die hiermit in den Offenbarungsgehalt der vorliegenden Anmeldung mit einbezogen wird.

Der zentrale Innenbereich eines jeweiligen Rahmenelements ist vorzugsweise mit einem insbesondere gitterartigen Abstandshalter versehen.

Dabei kann auf den beiden Seiten des insbesondere gitterartigen Abstandshalters optional jeweils eine Folie oder Membran angeordnet, insbesondere aufgeschweißt sein, wobei die Folien bzw. Membranen insbesondere auf den äußeren Rahmen aufgeschweißt sein können.

Vorteilhafterweise überdeckt eine jeweilige Folie bzw. Membran den gesamten insbesondere gitterartigen Abstandshalter, wobei die Durchlassöffnungen jedoch freigehalten werden.

Zweckmäßigerweise ist auf einander gegenüberliegenden Seiten eines jeweiligen Rahmenelements jeweils wenigstens ein Dampf- und/oder Fluidkanal vorgesehen. Dabei ist das Strömungssystem vorzugsweise so ausgelegt, dass die auf einer jeweiligen Seite vorgesehenen Dampf- und/oder Fluidkanäle der zu einem jeweiligen Stapel zusammengefassten Rahmenelemente miteinander fluchten.

Mit dem erfindungsgemäßen modularen Strömungssystem können durch unterschiedliche Konfektionierung der Rahmenelemente insbesondere mit Folien und/oder Membranen als Trennelemente durch Verschweißen der Rahmenelemente zuverlässig und kostengünstig unterschiedliche Funktionseinheiten wie beispielsweise Multieffekt-Membrandestillationsstufen, Dampferzeuger, Kondensatoren, Wärmetauscher, chemische Reaktoren, Filterkassetten, Pervaporationsstufen und/oder dergleichen gebildet werden. Dabei können mit einem Fertigungsprozess, in dem gegebenenfalls auch Folie und Membran verschweißt werden, alle notwendigen Variationen produziert werden, so dass durch Verschweißen mehrerer Rahmenelemente je nach verwendeten Trennstrukturen insbesondere Folien oder Membranfunktionseinheiten unterschiedlichster Ausführung, wie beispielsweise Energie- und Stoffübertrager bzw. -austauscher usw. zuverlässig und kostengünstig hergestellt werden können. Ein jeweiliges Rahmenelement kann je nach Verwendungszweck mit unterschiedlichen Durchbrüchen erstellt und verschweißt werden, so dass in einem jeweiligen verschweißten Stapel mehrere Strömungskanäle entstehen, die je nach Ausführung insbesondere durch Folien und/oder Membranen voneinander getrennt sein können.

Die einzelnen Rahmenelemente können über die Schweißstegstrukturen miteinander verbunden werden, wobei beispielsweise ein Reibschweißverfahren, Laserschweißverfahren und/oder Heizelementschweißverfahren angewandt werden kann.

Vorteilhafterweise umfasst das modulare Strömungssystem wenigstens ein Rahmenelement erster Art, das auf einer ersten und einer dieser gegenüberliegenden zweiten Seite jeweils einen Dampf- und/oder Fluidkanal, eine den Dampf- und/oder Fluidkanal auf der zweiten Seite mit dem zentralen Innenbereich verbindende Dampf- und/oder Fluiddurchlassöffnung und insbesondere auf der Unterseite eine Kondensatdurchlassöffnung umfasst, über die der zentrale Innenbereich mit einem durch die Schweißstruktur begrenzten Kondensatsammelkanal verbunden ist, und bei dem insbesondere zur Bildung eines Kondensationsraumes beidseitig des insbesondere gitterartigen Abstandshalters innerhalb der Schweißstegstruktur jeweils eine Folie so angeordnet ist, dass die Durchlassöffnungen frei bleiben. Vorzugsweise umfasst hierbei der äußere Rahmen auf einander gegenüberliegenden Seiten jeweils einen durch die Schweißstegstruktur abgegrenzten Inertgaskanal, wobei wenigstens ein, vorzugsweise beide Inertgaskanäle jeweils über eine Inertgasdurchlassöffnung mit dem zentralen Innenbereich bzw. Kondensationsraum verbunden sind, und vorzugsweise eine durch die Schweißstegstruktur abgegrenzte Unterdruckdurchlassöffnung.

Von Vorteil ist zudem, wenn das modulare Strömungssystem wenigstens ein Rahmenelement zweiter Art umfasst, das auf einer ersten und einer dieser gegenüberliegenden zweiten Seite jeweils einen Dampf- und/oder Fluidkanal und eine den Dampf- und/oder Fluidkanal auf der ersten Seite mit dem zentralen Innenbereich verbindende Dampf- und/oder Fluiddurchlassöffnung umfasst und bei dem insbesondere zur Bildung eines Dampf- bzw. Fluidraums beidseitig des insbesondere gitterartigen Abstandshalters innerhalb der Schweißstegstruktur jeweils eine wasserdichte, dampfdurchlässige Membran so angeordnet ist, dass die Durchlassöffnungen frei bleiben. Vorzugsweise umfasst hierbei der äußere Rahmen auf einander gegenüberliegenden Seiten jeweils einen durch die Schweißstegstruktur abgegrenzten Inertgaskanal, wobei diese Inertgaskanäle jeweils vom zentralen Innenbereich getrennt sind, und vorzugsweise eine durch die Schweißstegstruktur abgegrenzte Unterdruckdurchlassöffnung.

Zweckmäßigerweise kann das modulare Strömungssystem auch wenigstens ein Rahmenelement dritter Art umfassen, das auf einer ersten und einer dieser gegenüberliegenden zweiten Seite jeweils einen Dampf- und/oder Fluidkanal, eine den Dampf- und/oder Fluidkanal auf der ersten Seite mit dem zentralen Innenbereich verbindende Dampf- und/oder Fluiddurchlassöffnung und eine den Dampf- und/oder Fluidkanal auf der zweiten Seite mit dem zentralen Innenbereich verbindende Dampf- und/oder Fluiddurchlassöffnung umfasst und bei dem insbesondere zur Bildung eines Dampf- bzw. Fluidraumes beidseitig des insbesondere gitterartigen Abstandshalters innerhalb der Schweißstegstruktur jeweils eine Membran oder Folie so angeordnet ist, dass die Durchlassöffnungen frei bleiben. Vorzugsweise umfasst hierbei der äußere Rahmen auf einander gegenüberliegenden Seiten jeweils einen durch die Schweißstegstruktur abgegrenzten Inertgaskanal, wobei diese Inertgaskanäle jeweils vom zentralen Innenbereich getrennt sind, und vorzugsweise eine durch die Schweißstegstruktur abgegrenzte Unterdruckdurchlassöffnung.

Gemäß einer weiteren bevorzugten Ausführungsform umfasst das modulare Strömungssystem wenigstens ein Rahmenelement vierter Art, das auf einer ersten und einer dieser gegenüberliegenden zweiten Seite jeweils einen Dampf- und/oder Fluidkanal umfasst, wobei der insbesondere gitterartige Abstandshalter weder mit einer Folie noch mit einer Membran versehen ist. Vorzugsweise umfasst hierbei der äußere Rahmen auf einander gegenüberliegenden Seiten jeweils einen durch die Schweißstegstruktur abgegrenzten weiteren Kanal, insbesondere Inertgaskanal, wobei diese weiteren Kanäle bzw. Inertgaskanäle jeweils vom zentralen Innenbereich getrennt sind, und vorzugsweise eine durch die Schweißstegstruktur abgegrenzte Unterdruckdurchlassöffnung.

Von Vorteil ist insbesondere auch, wenn das modulare Strömungssystem wenigstens ein Rahmenelement fünfter Art umfasst, das auf einer ersten und einer dieser gegenüberliegenden zweiten Seite jeweils einen Dampf- und/oder Fluidkanal und eine den Dampf- und/oder Fluidkanal auf der ersten Seite mit dem zentralen Innenbereich verbindende Dampf- und/oder Fluiddurchlassöffnung umfasst und bei dem insbesondere zur Bildung eines Dampf- bzw. Fluidraumes beidseitig des insbesondere gitterartigen Abstandshalters innerhalb der Schweißstegstruktur jeweils eine wasserdichte, dampfdurchlässige Membran so angeordnet ist, dass die Durchlassöffnungen frei bleiben, wobei vorzugsweise der äußere Rahmen insbesondere eine durch die Schweißstegstruktur abgegrenzte Unterdruckdurchlassöffnung und auf einander gegenüber liegenden Seiten jeweils einen durch die Schweißstegstruktur abgegrenzten Inertgaskanal umfasst und diese Inertgaskanäle jeweils vom zentralen Innenbereich getrennt sind, und wobei die Durchlassöffnungen wenigstens zwei erste Durchlassöffnungen und wenigstens zwei weitere Durchlassöffnungen umfassen und die Schweißstegstruktur mit zusätzlichen Schweißstegteilstücken versehen ist, um die ersten Durchlassöffnungen gegenüber den weiteren Durchlassöffnungen abzugrenzen.

Dieses Rahmenelement fünfter Art besitzt einen ähnlichen Aufbau wie das Rahmenelement zweiter Art, wobei jedoch zusätzliche Schweißstegteilstücke eingefügt sind, um die ersten Durchlassöffnungen von den zweiten Durchlassöffnungen zu trennen. Damit können insbesondere zwei getrennte Fluidkreise verwirklicht werden. So kann beispielsweise ein Fluidkreis über die ersten Durchlassöffnungen und ein weiterer Fluidkreis über die weiteren Durchlassöffnungen betrieben werden. Vorteilhafterweise kann das modulare Strömungssystem auch wenigstens ein Rahmenelement sechster Art umfassen, das auf einer ersten und einer dieser gegenüberliegenden zweiten Seite jeweils einen Dampf- und/oder Fluidkanal umfasst, wobei beidseitig des insbesondere gitterartigen Abstandshalters innerhalb der Schweißstegstruktur jeweils eine Folie so angeordnet ist, dass die Durchlassöffnungen frei bleiben, wobei vorzugsweise der äußere Rahmen insbesondere eine durch die Schweißstegstruktur abgegrenzte Unterdruckdurchlassöffnung und auf einander gegenüber liegenden Seiten jeweils einen durch die Schweißstegstruktur abgegrenzten weiteren Kanal, insbesondere Inertgaskanal, umfasst und diese weiteren Kanäle bzw. Inertgaskanäle jeweils vom zentralen Innenbereich getrennt sind, und wobei die Durchlassöffnungen wenigstens zwei erste Durchlassöffnungen und wenigstens zwei weitere Durchlassöffnungen umfassen, die Schweißstegstruktur mit zusätzlichen Schweißstegteilstücken versehen ist, um die ersten Durchlassöffnungen gegenüber den weiteren Durchlassöffnungen abzugrenzen, und der äußere Rahmen mit Durchlassöffnungsdurchbrüchen versehen ist, über die der durch die Folien begrenzte Dampf- bzw. Fluidraum mit den ersten Durchlassöffnungen verbunden ist.

Ein solches Rahmenelement sechster Art kann beispielsweise zur Verwirklichung einer Perforationsstufe oder -moduls verwendet werden. Es besitzt einen ähnlichen Aufbau wie das Rahmenelement vierter Art, wobei jedoch auf beiden Seiten jeweils eine Folie vorgesehen ist sowie zusätzliche Schweißstegteilstücke und Durchlassöffnungsdurchbrüche vorgesehen sind.

Bevorzugt ist ein jeweiliger, mehrere durch Schweißen zusammengefasste Rahmenelemente umfassender Stapel an seinen beiden Enden jeweils mit einer Anschlussöffnungen aufweisenden Deckplatte verbunden, insbesondere verschweißt.

Dabei ist vorteilhafterweise wenigstens eine der beiden Deckplatten mit einem Unterdruckanschluss versehen.

Die durch die Schweißstegstruktur abgegrenzte Unterdruckdurchlassöffnung eines jeweiligen Rahmenelements kann bei den Deckplatten mit dem Unterdruckanschluss fluchten.

Bevorzugt ist wenigstens eine der beiden Deckplatten mit einer die Anschlussöffnungen umschließenden und am Deckelrand angeordneten Unterdruckdichtung versehen.

Indem sich zwei aufeinander folgenden Stapeln zugeordnete Deckplatten gegenüberstehen, von denen zumindest eine Unterdruckdichtungen auf-weist, können aufeinander folgende Stapel mit geringem Aufwand zusammengeschlossen werden, indem die Deckplatten leicht aneinander gedrückt und der Zwischenraum über den Unterdruckanschluss mit Unterdruck beaufschlagt wird, wodurch die Deckplatten gegeneinander gepresst werden. Durch die Unterdruckdurchlassöffnung teilt sich der angelegte Unterdruck den folgenden Stapeln mit und presst sie ebenfalls gegeneinander. Durch die die Anschlussöffnungen umschließenden Unterdruckdichtungen werden die entsprechenden Anschlüsse der beiden Stapel dicht miteinander verbunden. Über unterschiedliche Ausführungen der Durchlassöffnungen lassen sich die verschiedenen Funktionseinheiten, z.B. ein Dampferzeuger, mehrere, beispielsweise drei Membrandestillati-onsstufen und ein Kondensator einer Multieffekt-Membrandestillationsvorrichtung, ohne großen Aufwand zusammenschließen. Eine Multieffektstufe vereinigt Kondensation und Verdampfung in einer Stufe. Kondensation und Verdampfung finden auf zwei unterschiedlichen Druckniveaus statt.

Eine bevorzugte Ausführungsform des erfindungsgemäßen modularen Strömungssystems zeichnet sich dadurch aus, dass zur Bildung einer Membrandestillationsstufe ein wenigstens zwei, insbesondere wenigstens zehn Rahmenelemente umfassender Stapel vorgesehen ist, in dem wechselweise Rahmenelemente erster und zweiter Art enthalten sind, dass zur Bildung eines Dampferzeugers ein wenigstens zwei, insbesondere wenigstens zehn Rahmenelemente umfassender Stapel vorgesehen ist, in dem wechselweise Rahmenelemente zweiter und vierter Art enthalten sind, dass zur Bildung eines Kondensators ein wenigstens zwei, insbesondere wenigstens zehn Rahmenelemente umfassender Stapel vorgesehen ist, in dem wechselweise Rahmenelemente erster und vierter Art enthalten sind, dass zur Bildung eines Wärmetauschers ein wenigstens zwei, insbesondere wenigstens zehn Rahmenelemente umfassender Stapel vorgesehen ist, in dem wechselweise Rahmenelemente dritter und vierter Art enthalten sind, dass zur Bildung eines Filters ein mehrere Rahmenelemente umfassender Stapel vorgesehen ist, in dem wechselweise jeweils beidseitig mit Filtermembranen versehene Rahmenelemente dritter und vierter Art enthalten sind, und/oder dass zur Bildung einer Pervaporationsstufe ein mehrere Rahmenelemente umfassender Stapel vorgesehen ist, in dem wechselweise beidseitig mit Pervaporationsmembranen und beidseitig mit Folien versehene Rahmenelemente, insbesondere Rahmenelemente fünfter und sechster Art, enthalten sind.

Indem wechselweise ein mit Membran versehenes Rahmenelement fünfter Art und ein beidseitig mit Folie versehenes Rahmenelement sechster Art zu einem Stapel und die Enden mit den genannten Deckplatten verschweißt werden, lassen sich beispielsweise Perforationsstufen oder -module bzw. Dampferzeuger mit integriertem Heizkreis verwirklichen. Dabei ergibt sich zwischen jeweils zwei Rahmenelementen durch die Resthöhe der beim Verschweißen abgetragenen Schweißstruktur einschließlich der zusätzlichen Schweißstegteilstücke ein mit den weiteren Durchlassöffnungen verbundener Raum, der auf der einen Seite durch eine Folie und auf der anderen Seite durch eine Membran begrenzt ist. Von Vorteil ist hierbei insbesondere auch, wenn zwischen Folie und Membran ein beispielsweise netzartiger Abstandshalter oder so genannter "Spacer" eingelegt ist, der den Abstand zwischen Folie und Membran definiert. Ein solcher Abstandshalter ist grundsätzlich auch bei allen anderen Stufen bzw. Modulen in diesem Raum zweckmäßig.

Die Durchlassöffnungsdurchbrüche verbinden den durch die Folien begrenzten Dampf- bzw. Fluidraum der Rahmenelemente sechster Art mit den ersten Durchlassöffnungen. Der durch die Membrane begrenzte Dampf- bzw. Fluidraum der Rahmen fünfter Art ist über die betreffende Dampf- und/oder Fluiddurchlassöffnung mit dem Dampf- und/oder Fluidkanal verbunden.

Bevorzugt sind auch die keine Kondensatdurchlassöffnungen aufweisenden Rahmenteile jeweils mit einem durch die Schweißstegstruktur begrenzten Kondensatsammelkanal versehen, wobei in einem betreffenden Stapel die Kondensationssammelkanäle der verschiedenen Rahmenteile miteinander ausgerichtet sein können.

Die Erfindung wird im Folgenden anhand von Ausführungsbeispielen unter Bezugnahme auf die Zeichnung näher erläutert; in dieser zeigen:
- Fig. 1: eine schematische Darstellung eines beispielhaften Rahmenelements erster Art, wobei die Folien der Übersichtlichkeit halber weggelassen sind,
- Fig. 2: eine schematische Darstellung eines beispielhaften Rahmenelements zweiter Art, wobei die Membranen der Übersichtlichkeit halber weggelassen sind,
- Fig. 3: eine schematische Darstellung eines beispielhaften Rahmenelements dritter Art, wobei die Membranen bzw. Folien der Übersichtlichkeit halber weggelassen sind,
- Fig. 4: eine schematische Darstellung eines beispielhaften Rahmenelements vierter Art,
- Fig. 5: eine schematische Darstellung eines beispielhaften Rahmenelements fünfter Art,
- Fig. 6: eine schematische Darstellung eines beispielhaften Rahmenelements sechster Art,
- Fig. 7: eine schematische Darstellung eines beispielhaften, mehrere Rahmenelemente umfassenden Stapels zur Bildung einer Membrandestillationsstufe, insbesondere Multieffekt-Membrandestillationsstufe,
- Fig. 7a: eine schematische Darstellung einer Hintereinanderschaltung von beispielsweise zwei jeweils mit Deckplatten versehenen Membrandestillationsstufen gemäß Fig. 7,
- Fig. 8: eine schematische Darstellung eines beispielhaften, mehrere Rahmenelemente umfassenden Stapels zur Bildung eines Dampferzeugers,
- Fig. 9: eine schematische Darstellung eines beispielhaften, mehrere Rahmenelemente umfassenden Stapels zur Bildung eines Kondensators,
- Fig. 10: eine schematische Darstellung eines beispielhaften, mehrere Rahmenelemente umfassenden Stapels zur Bildung eines Wärmetauschers,
- Fig. 11: eine schematische Darstellung eines beispielhaften, mehrere Rahmenelemente umfassenden Stapels zur Bildung eines Pervaporationsmoduls,
- Fig. 12: eine schematische Darstellung einer beispielhaften Deckplatte, und
- Fig. 13: eine schematische Darstellung einer weiteren beispielhaften Deckplatte.

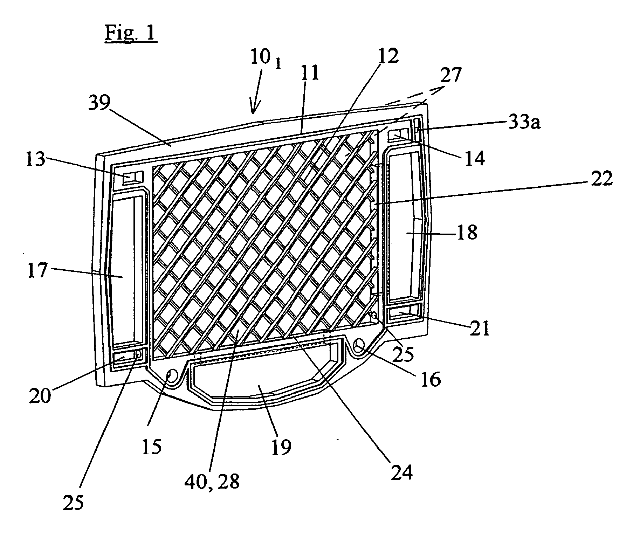

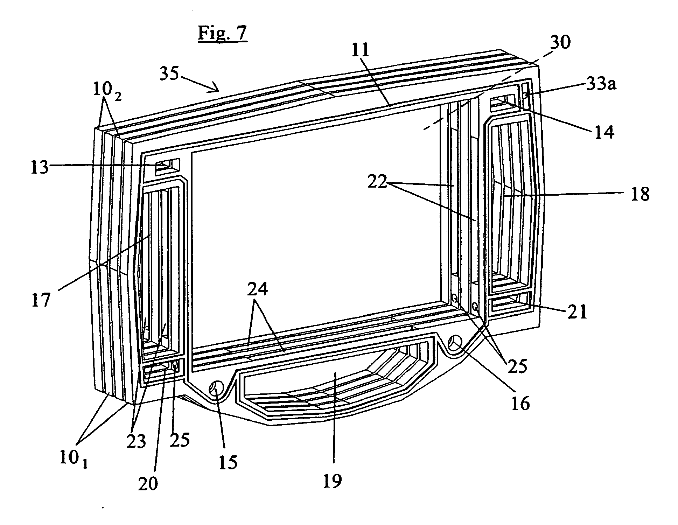

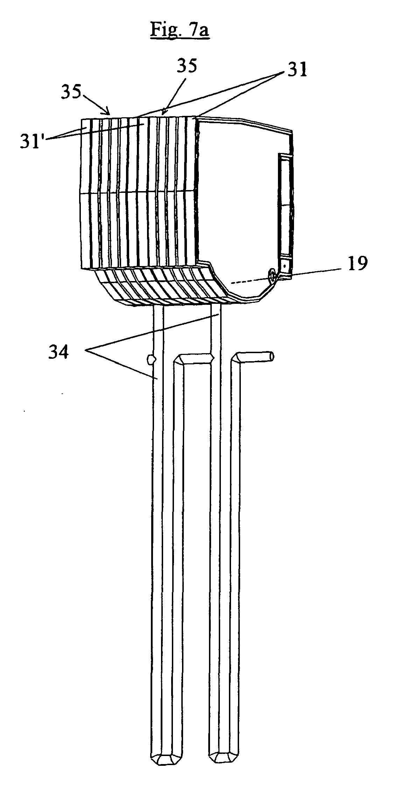

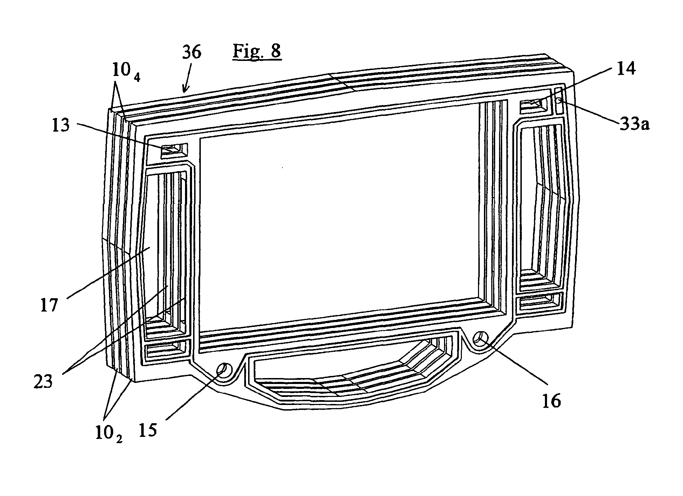

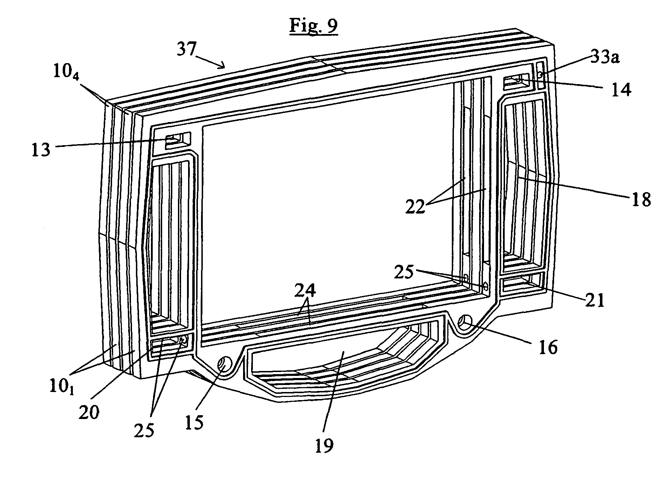

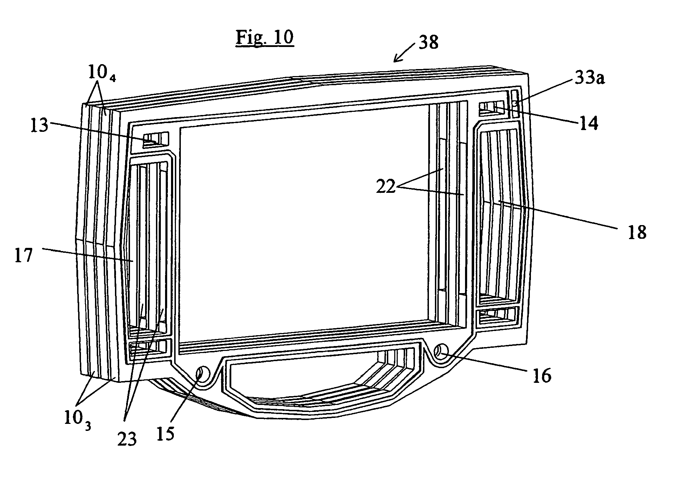

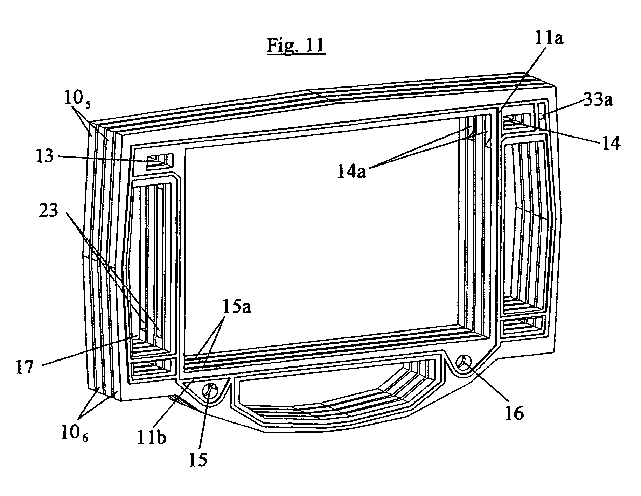

Ein modulares Strömungssystem umfasst eine Mehrzahl von Rahmenelementen, die zur Bildung unterschiedlicher Funktionseinheiten zusammenfassbar sind. Dabei kann es beispielsweise ein oder mehrere der im Folgenden anhand der Fig. 1 bis 6 näher beschriebenen Rahmenelemente 10₁ bis 10₆ umfassen, die insbesondere zur Bildung einer Multieffekt-Membrandestillationsstufe 35 (vgl. Fig. 7), eines Dampferzeugers 36 (vgl. Fig. 8), eines Kondensators 37 (vgl. Fig. 9), eines Wärmetauschers 38 (vgl. Fig. 10), eines Filters, einer Pervaporationsstufe oder -moduls (vgl. Fig. 11) und/oder dergleichen über Schweißstegstrukturen 11 zu unterschiedlichen, jeweils wenigstens zwei, insbesondere jeweils wenigstens zehn Rahmenelemente umfassenden Stapeln (vgl. die Fig. 7 bis 11) zusammenfassbar sind.

Die Rahmenelemente 10₁ bis 10₆ umfassen jeweils einen mit Durchlassöffnungen 13 bis 16, Dampf- und/oder Fluidkanälen 17, 18 und Unterdruckdurchlassöffnung 33a versehenen äußeren Rahmen 39 und einen vom äußeren Rahmen 39 umschlossenen zentralen Innenbereich 40. Zudem sind die Rahmenelemente 10₁ bis 10₆ beidseitig jeweils mit einer Schweißstegstruktur 11 versehen, die einerseits einen die Durchlassöffnungen 13 bis 16, die Unterdruckdurchlassöffnung 33a sowie den zentralen Innenbereich 40 umfassenden Bereich und andererseits zumindest zwei jeweils einen Dampf- und/oder Fluidkanal 17, 18 umfassende Bereiche abgrenzt.

Wie anhand der Fig. 1 bis 6 zu erkennen ist, ist der zentrale Innenbereich 40 eines jeweiligen Rahmenelements 10₁ bis 10₆ zweckmäßigerweise mit einem insbesondere gitterartigen Abstandshalter 12 versehen.

Auf den beiden Seiten des insbesondere gitterartigen Abstandshalters 12 kann gegebenenfalls jeweils eine Folie 27 oder Membran 26 angeordnet, insbesondere auf den äußeren Rahmen 39 aufgeschweißt sein. Dabei überdeckt eine jeweilige Folie 27 bzw. Membran 26 bevorzugt den gesamten, insbesondere gitterartigen Abstandshalter 12, wobei die Durchlassöffnungen 13 bis 16 jedoch freigehalten werden.

Auf einander gegenüberliegenden Seiten, in den Fig. 1 bis 6 der linken und der rechten Seite, eines jeweiligen Rahmenelements 10₁ bis 10₆ kann jeweils wenigstens ein Dampf- und/oder Fluidkanal 17, 18 vorgesehen sein.

Dabei ist das modulare Strömungssystem zweckmäßigerweise so ausgeführt, dass die auf einer jeweiligen Seite vorgesehenen Dampf- und/oder Fluidkanäle 17, 18 der zu einem jeweiligen Stapel zusammengefassten Rahmenelemente miteinander fluchten. Dasselbe trifft zweckmäßigerweise auch auf die Durchlassöffnungen 13 bis 16 und die Unterdruckdurchlassöffnung 33a zu.

Das modulare Strömungssystem kann beispielsweise wenigstens ein in der Fig. 1 gezeigtes Rahmenelement 10₁ erster Art umfassen, das auf einer ersten, hier beispielsweise linken, und einer dieser gegenüberliegenden zweiten, hier beispielsweise rechten Seite jeweils einen Dampf- und/oder Fluidkanal 17 bzw. 18, eine den Dampf- und/oder Fluidkanal 18 auf der zweiten Seite mit dem zentralen Innenbereich 40 verbindende Dampf- und Fluiddurchlassöffnung 22 und insbesondere auf der Unterseite eine Kondensatdurchlassöffnung 24 umfasst, über die der zentrale Innenbereich 40 mit einem durch die Schweißstegstruktur 11 begrenzten Kondensatsammelkanal 19 verbunden ist, und bei dem insbesondere zur Bildung eines Kondensationsraums 28 beidseitig des insbesondere gitterartigen Abstandshalters 12 innerhalb der Schweißstegstruktur 11 jeweils eine Folie 27 (nicht gezeigt) so angeordnet ist, dass die Durchlassöffnungen 13 bis 16 frei bleiben. Bevorzugt umfasst der äußere Rahmen 39 eine Unterdruckdurchlassöffnung 33a und auf einander gegenüberliegenden Seiten (hier wieder der linken und der rechten Seite), jeweils einen durch die Schweißstegstruktur 11 abgegrenzten Inertgaskanal 20 bzw. 21. Diese Inertgaskanäle 20, 21 sind jeweils über eine Inertgasdurchlassöffnung 25 mit dem zentralen Innenbereich 40 bzw. Kondensationsraum 28 verbunden ist. Beispielsweise im Fall einer Multieffekt-Membrandestillationsstufe (vgl. Fig. 7) können somit die Inertgase durch alle Rahmen bzw. Stufen geschleppt werden.

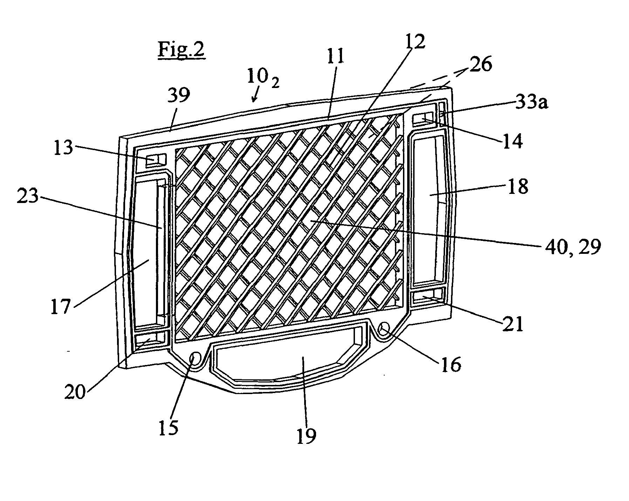

Das modulare Strömungssystem kann insbesondere auch wenigstens ein in der Fig. 2 gezeigtes Rahmenelement 10₂ zweiter Art umfassen, das auf der ersten bzw. linken und der dieser gegenüberliegenden zweiten bzw. rechten Seite jeweils einen Dampf- und/oder Fluidkanal 17 bzw. 18 und eine den Dampf- und/oder Fluidkanal 17 auf der ersten Seite mit dem zentralen Innenbereich 40 verbindende Dampf- und/oder Fluiddurchlassöffnung 23 umfasst und bei dem insbesondere zur Bildung eines Dampf- bzw. Fluidraums 29 beidseitig des insbesondere gitterartigen Abstandshalters innerhalb der Schweißstegstruktur 11 jeweils eine wasserdichte, dampfdurchlässige Membran 26 (nicht gezeigt) so angeordnet ist, dass die Durchlassöffnungen 13 bis 16 frei bleiben. Vorzugsweise umfasst hierbei der äußere Rahmen 39 auf einander gegenüberliegenden Seiten, hier der ersten bzw. linken und der zweiten bzw. rechten Seite, jeweils einen durch die Schweißstegstruktur 11 abgegrenzten Inertgaskanal 20, 21 und eine Unterdruckdurchlassöffnung 33a, wobei diese Inertgaskanäle 20, 21 und die Unterdruckdurchlassöffnung 33a jeweils vom zentralen Innenbereich 40 getrennt sind.

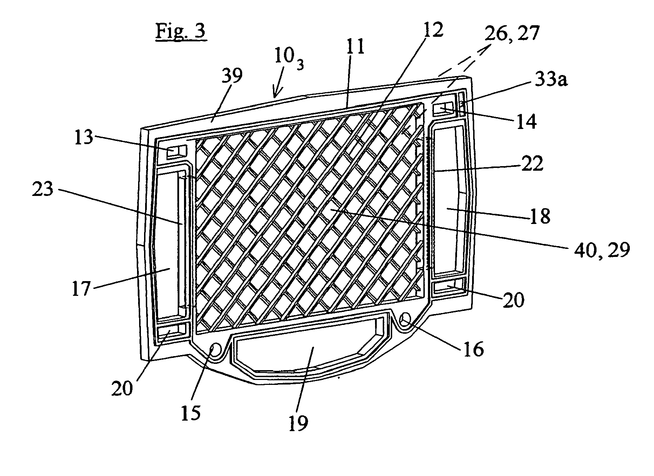

Das modulare Strömungssystem kann insbesondere auch wenigstens ein in der Fig. 3 gezeigtes Rahmenelement 10₃ dritter Art umfassen, das auf der ersten bzw. linken und der dieser gegenüberliegenden zweiten bzw. rechten Seite jeweils einen Dampf- und/oder Fluidkanal 17 bzw. 18, eine den Dampf- und/oder Fluidkanal 17 auf der ersten Seite mit dem zentralen Innenbereich 40 verbindende Dampf- und/oder Fluiddurchlassöffnung 23 und eine den Dampf- und/oder Fluidkanal 18 auf der zweiten Seite mit dem zentralen Innenbereich 40 verbindende Dampf- und/oder Fluiddurchlassöffnung 22 umfasst und bei dem insbesondere zur Bildung eines Dampf- bzw. Fluidraumes 29 beidseitig des insbesondere gitterartigen Abstandshalters 12 innerhalb der Schweißstegstruktur 11 jeweils eine Membran 26 oder Folie 27 (nicht gezeigt) so angeordnet ist, dass die Durchlassöffnungen 13 bis 16 frei bleiben. Vorzugsweise umfasst hierbei der äußere Rahmen 39 auf einander gegenüberliegenden Seiten, hier der linken und rechten Seite, jeweils einen durch die Schweißstegstruktur 11 abgegrenzten Inertgaskanal 20, 21 und eine Unterdruckdurchlassöffnung 33a, wobei die Inertgaskanäle 20, 21 und die Unterdruckdurchlassöffnung 33a im vorliegenden Fall jeweils vom zentralen Innenbereich 40 getrennt sind.

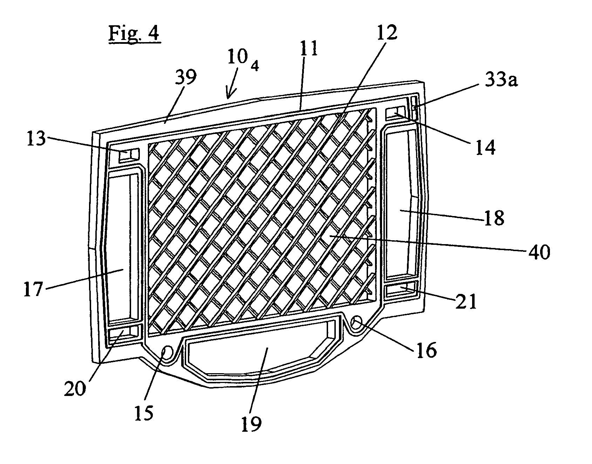

Das modulare Strömungssystem kann beispielsweise auch wenigstens ein in der Fig. 4 gezeigtes Rahmenelement 10₄ vierter Art umfassen, das auf der ersten bzw. linken und der gegenüberliegenden zweiten bzw. rechten Seite jeweils einen Dampf- und/oder Fluidkanal 17 bzw. 18 umfasst, wobei der insbesondere gitterartige Abstandshalter 12 im vorliegenden Fall weder mit einer Folie noch mit einer Membran versehen ist. Vorzugsweise umfasst der äußere Rahmen 39 auf einander gegenüberliegenden Seiten, hier der linken und rechten Seite, jeweils einen durch die Schweißstegstruktur 11 abgegrenzten weiteren Kanal, z.B. Inertgaskanal 20, 21 und Unterdruckdurchlassöffnung 33a. Diese weiteren Kanäle bzw. Inertgaskanäle 20, 21 und die Unterdruckdurchlassöffnung 33a sind im vorliegenden Fall jeweils vom zentralen Innenbereich 40 getrennt. Es handelt sich im vorliegenden Fall also um ein Rahmenelement 10₄ vierter Art ohne Durchlassöffnungen 22, 23 und 24.

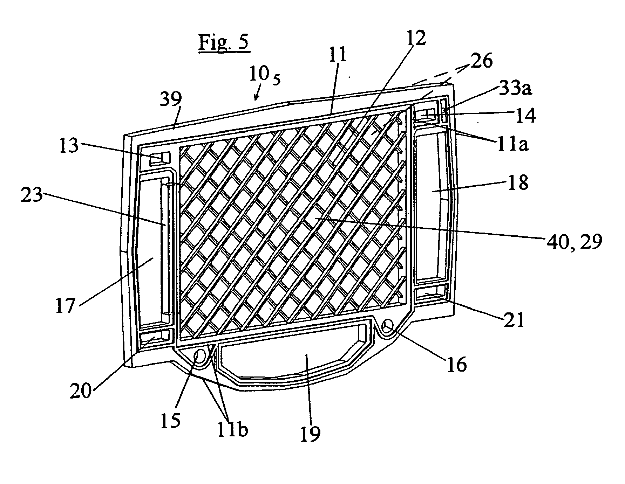

Das modulare Strömungssystem kann vorteilhafterweise auch wenigstens ein in der Fig. 5 gezeigtes Rahmenelement 10₅ fünfter Art umfassen, das auf einer ersten und einer dieser gegenüberliegenden zweiten Seite jeweils einen Dampf- und/oder Fluidkanal 17 bzw. 18 und eine den Dampf- und/oder Fluidkanal 17 auf der ersten Seite mit dem zentralen Innenbereich 40 verbindende Dampf- und/oder Fluiddurchlassöffnung 23 umfasst und bei dem insbesondere zur Bildung eines Dampf- bzw. Fluidraumes 29 beidseitig des insbesondere gitterartigen Abstandshalters 12 innerhalb der Schweißstegstruktur 11 jeweils eine insbesondere wasserdichte, dampfdurchlässige Membran 26 so angeordnet ist, dass die Durchlassöffnungen 13 bis 16 frei bleiben. Der äußere Rahmen 39 umfasst auf einander gegenüberliegenden Seiten vorzugsweise jeweils einen durch die Schweißstegstruktur 11 abgegrenzten Inertgaskanal 20, 21 und eine Unterdruckdurchlassöffnung 33a, wobei diese Inertgaskanäle 20, 21 und die Unterdruckdurchlassöffnung 33a jeweils vom zentralen Innenbereich 40 getrennt sind.

Die Durchlassöffnungen 13 bis 16 umfassen wenigstens zwei erste Durchlassöffnungen 14, 15 und wenigstens zwei weitere Durchlassöffnungen 13, 16. Dabei ist die Schweißstegstruktur 11 mit zusätzlichen Schweißstegteilstücken 11a, 11b versehen, um die ersten Durchlassöffnungen 14, 15 gegenüber den weiteren Durchlassöffnungen 13, 16 abzugrenzen.

Dieses Rahmenelement 10₅ fünfter Art, das insbesondere bei einem Pervaporationsmodul oder -stufe Verwendung finden kann, besitzt einen ähnlichen Aufbau wie das Rahmenelement 10₂ zweiter Art, wobei jedoch die zusätzlichen Schweißstegteilstücke 11a und 11b eingefügt sind, so dass die ersten Durchlassöffnungen 14, 15 von den weiteren Durchlassöffnungen 13, 16 getrennt werden. Es lassen sich dadurch zwei getrennte Fluidkreise verwirklichen. So kann ein Fluidkreis über die weiteren Durchlassöffnungen 13, 16 und ein Fluidkreis über die ersten Durchlassöffnungen 14, 15 betrieben werden.

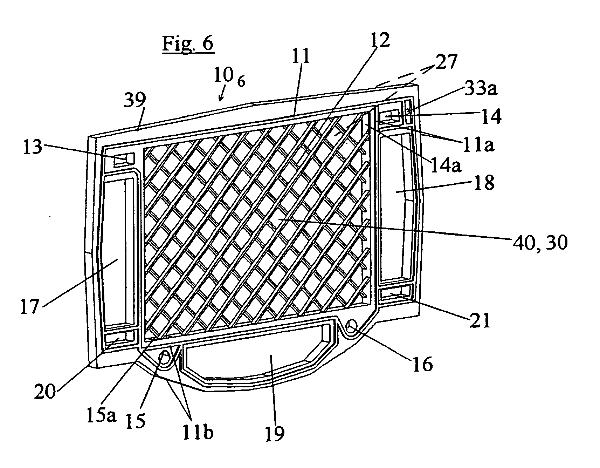

Vorteilhafterweise kann das modulare Strömungssystem beispielsweise auch wenigstens ein in der Fig. 6 gezeigtes Rahmenelement 10₆ sechster Art umfassen, das auf einer ersten und einer dieser gegenüberliegenden zweiten Seite jeweils einen Dampf- und/oder Fluidkanal 17 bzw. 18 umfasst, wobei beidseitig des insbesondere gitterartigen Abstandshalters 12 innerhalb der Schweißstegstruktur 11 jeweils eine Folie 27 so angeordnet ist, dass die Durchlassöffnungen 13 bis 16 frei bleiben. Der äußere Rahmen 39 kann auf einander gegenüberliegenden Seiten jeweils einen durch die Schweißstegstruktur 11 abgegrenzten weiteren Kanal, insbesondere Inertgaskanal 20, 21 und eine Unterdruckdurchlassöffnung 33a umfassen, wobei diese weiteren Kanäle bzw. Inertgaskanäle 20, 21 und die Unterdruckdurchlassöffnung 33a jeweils vom zentralen Innenbereich 40 getrennt sind.

Die Durchlassöffnungen 13 bis 16 umfassen wenigstens zwei erste Durchlassöffnungen 14, 15 und wenigstens zwei weitere Durchlassöffnungen 13, 16. Die Schweißstegstruktur 11 ist mit zusätzlichen Schweißstegteilstücken 11a, 11b versehen, um die ersten Durchlassöffnungen 14, 15 gegenüber den weiteren Durchlassöffnungen 13, 16 abzugrenzen. Zudem ist der äußere Rahmen 39 mit Durchlassöffnungsdurchbrüchen 14a, 15a versehen, über die der durch die Folien 27 begrenzte Dampf- bzw. Fluidraum 29 mit den ersten Durchlassöffnungen 14, 15 verbunden ist.

Dieses Rahmenelement 10₆ sechster Art kann ebenfalls beispielsweise für ein Pervaporationsmodul oder -stufe verwendet werden. Es besitzt einen ähnlichen Aufbau wie das Rahmenelement 10₄ vierter Art, wobei es jedoch beidseitig mit Folie versehen ist und zudem die Schweißstegteilstücke 11a und 11b sowie die Durchlassöffnungsdurchbrüche 14a und 15a vorgesehen sind.

Die Membranen 26 oder Folien 27 können jeweils insbesondere auf den äußeren Rahmen 39 aufgeschweißt sein.

Es können insbesondere auch die nicht mit einer Kondensatdurchlassöffnung versehenen Rahmenelemente jeweils mit einem durch die Schweißstruktur 11 begrenzten Kondensatsammelkanal 19 versehen sein.

Wie bereits erwähnt, sind die Dampf- und/oder Fluidkanäle 17, 18 der in einem jeweiligen Stapel zusammengefassten Rahmenelemente zweckmäßigerweise miteinander ausgerichtet. Dasselbe trifft zweckmäßigerweise auch auf die Durchlassöffnungen 13 bis 16, die Inertgas- bzw. weiteren Kanäle 20, 21, die Unterdruckdurchlassöffnung 33a und die Kondensatsammelkanäle 19 zu.

Wie insbesondere den Fig. 1 bis 6 entnommen werden kann, können die Durchlassöffnungen 13, 14 sowie die Unterdruckdurchlassöffnung 33a beispielsweise oberhalb der Dampf- und/oder Fluidkanäle 17, 18 und die Inertgas- bzw. weiteren Kanäle 20, 21 beispielsweise jeweils unterhalb der Dampf- und/oder Fluidkanäle 17, 18 vorgesehen sein. Die Durchlassöffnungen 15, 16 können beispielsweise beiderseits des Kondensationssammelkanals 19 unterhalb des insbesondere gitterartigen Abstandshalters 12 vorgesehen sein.

Fig. 7 zeigt in schematischer Darstellung einen beispielsweise vier Rahmenelemente umfassenden Stapel zur Bildung einer Membrandestillationsstufe 35, in dem wechselweise Rahmenelemente 10₁, 10₂ erster und zweiter Art enthalten sind. Dabei kann es sich insbesondere um eine Multieffekt-Stufe handeln. Zur besseren Erkennbarkeit der unterschiedlichen Dampf- und Kondensatdurchlassöffnungen sind die insbesondere gitterartigen Abstandshalter 12, die Membranen 26 und die Folien 27 weggelassen. Zu sehen sind die den beiden Rahmenteilen 10₁ erster Art zugeordneten Dampfdurchlassöffnungen 22, Kondensatdurchlassöffnungen 24 und Inertgasdurchlassöffnungen 25 sowie die den beiden Rahmenteilen 10₂ zweiter Art zugeordneten Dampfdurchlassöffnungen 23. Zwischen Folie 27 und Membran 26 kann ein beispielsweise netzartiger Abstandshalter oder so genannter "Spacer" eingelegt sein, der den Abstand zwischen Folie 27 und Membran 26 definiert.

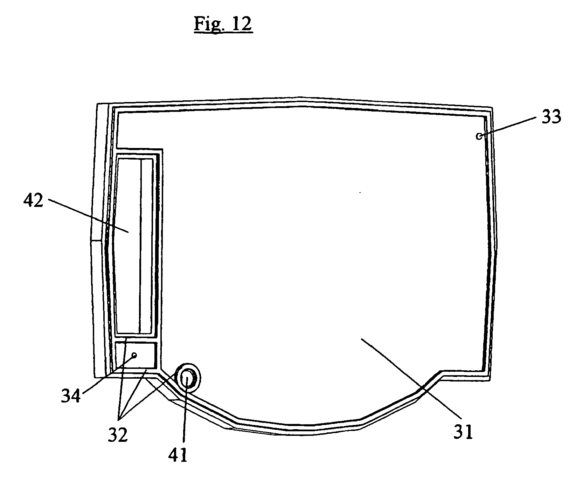

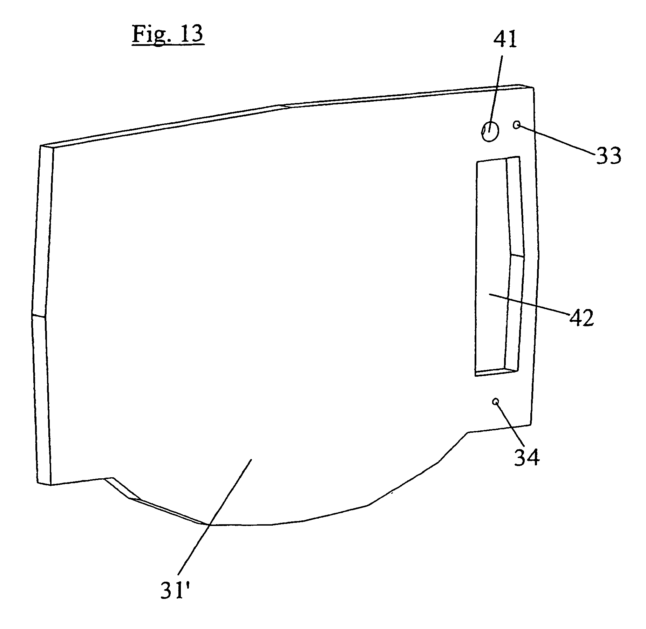

Fig. 7a zeigt in schematischer Darstellung eine Hintereinanderschaltung von beispielsweise zwei jeweils mit Deckplatten 31 und 31' (vgl. Fig. 12 und 13) versehenen Membrandestillationsstufen 35 gemäß Fig. 7, bei denen die jeweiligen Kondensatabläufe über U-Rohre 44 miteinander verbunden sind. Es können grundsätzlich jedoch auch mehr als zwei Stufen hintereinander geschaltet werden.

So lassen sich gemäß Fig. 7a die Kondensatsammelkanäle 19 der jeweiligen Stufen 35 über die U-Rohre 44 miteinander verbinden. Diese Ausführung ist zum Sammeln des Destillates notwendig, da die Kondensatsammelkanäle 19 der jeweiligen Stufen im Betrieb auf unterschiedlichen Druckniveaus liegen. Bei einer direkten Verbindung der Kondensatsammelkanäle 19 miteinander würde diese Verbindung vom Druck der Stufe 35 mit dem höchsten Druckniveau freigedrückt werden, und es gäbe einen Druckkurzschluss der verschiedenen Stufen 35. Im U-Rohr 44 werden die unterschiedlichen Druckniveaus zwischen jeweils zwei Kondensatsammelkanälen 19 über die Steighöhenunterschiede des Kondensates in den beiden Schenkeln des verbindenden U-Rohres 44 miteinander entkoppelt.

Fig. 8 zeigt in schematischer Darstellung einen beispielsweise vier Rahmenelemente umfassenden Stapel zur Bildung eines Dampferzeugers 36, in dem wechselweise Rahmenelemente 10₂, 10₄ zweiter und vierter Art enthalten sind. Zur besseren Übersicht im Hinblick auf die unterschiedlichen Dampfdurchlassöffnungen sind die insbesondere gitterartigen Abstandshalter 12 und die Membranen 26 weggelassen. Zu erkennen sind die den Rahmenelementen 10₂ zugeordneten Dampfdurchlassöffnungen 23. Bei einem solchen Dampferzeuger kann die Folie entfallen. Die Membranen können über das Rahmenelement vierter Art getrennt sein.

Fig. 9 zeigt in schematischer Darstellung einen beispielsweise vier Rahmenelemente umfassenden Stapel zur Bildung eines Kondensators 37, in dem wechselweise Rahmenelemente 10₁, 10₄ erster und vierter Art enthalten sind. Zur besseren Übersicht im Hinblick auf die unterschiedlichen Dampf- und Kondensatdurchlassöffnungen sind die insbesondere gitterartigen Abstandshalter 12 und die Folien 27 weggelassen. Zu erkennen sind insbesondere die den beiden Rahmenteilen 10₁ erster Art zugeordneten Dampfdurchlassöffnungen 22, Kondensatdurchlassöffnungen 24 und Inertgasdurchlassöffnungen 25. Bei einem solchen Kondensator kann die Membran entfallen. Die Folien können über das Rahmenelement vierter Art getrennt sein.

Fig. 10 zeigt in schematischer Darstellung einen beispielsweise vier Rechteckelemente umfassenden Stapel zur Bildung eines Wärmetauschers 38, in dem wechselweise Rahmenelemente 10₃, 10₄ dritter und vierter Art enthalten sind. Zur besseren Übersicht im Hinblick auf die unterschiedlichen Dampf- und Kondensatdurchlassöffnungen sind die insbesondere gitterartigen Abstandshalter 12 und die Folien 27 weggelassen. Zu erkennen sind insbesondere die den Rahmenelementen 10₃ dritter Art zugeordneten Fluiddurchlassöffnungen 22 und Fluiddurchlassöffnungen 23. Bei einem solchen Wärmetauscher kann die Membran entfallen. Die Folien können über das Rahmenelement vierter Art getrennt sein.

Fig. 11 zeigt in schematischer Darstellung einen beispielhaften, mehrere, hier z.B. wieder vier Rahmenelemente umfassenden Stapel zur Bildung einer Pervaporationsstufe oder -moduls. Dieses Pervaporationsmodul umfasst wechselweise angeordnete Rahmen 10₅ fünfter Art und 10₆ sechster Art. Wird für einen jeweiligen Rahmen 10₅ fünfter Art anstatt einer Pervaporationsmembran eine Membran wie in einer Membrandestillationsstufe verwendet, so erhält man einen Dampferzeuger mit integriertem Heizkreis.

So lassen sich gemäß Fig. 11 beispielsweise Pervaporationsmodule (Pervaporationsstufen) bzw. Dampferzeuger mit integriertem Heizkreis erstellen, indem wechselweise ein mit einer entsprechenden Membran versehenes Rahmenelement 10₅ fünfter Art gemäß Fig. 5 mit einem beidseitig mit einer Folie versehenen Rahmenelement 10₆ sechster Art gemäß Fig. 4 zu einem Stapel und die Enden beispielsweise mit Deckplatten 31, 31' gemäß den Fig. 12 und 13 verschweißt werden. Zwischen jeweils zwei Rahmenelementen ergibt sich durch die Resthöhe der beim Verschweißen abgetragenen Schweißstegstruktur 11 einschließlich der Schweißstegteilstücke 11a, 11b ein mit den Durchlassöffnungen 13 und 16 verbundener Raum, der auf der einen Seite durch eine Folie 27 und auf der anderen Seite durch eine Membran 28 begrenzt ist. Dabei ist zweckmäßigerweise zwischen Folie 27 und Membran 26 ein beispielsweise netzartiger Abstandshalter oder so genannter "Spacer" gelegt, der den Abstand zwischen Folie 27 und Membran 26 definiert. Ein solcher Abstandshalter kann vorteilhafterweise auch bei allen anderen Stufen bzw. Modulen bei diesem Raum vorgesehen sein.

Die Durchlassöffnungsdurchbrüche 14a und 15a verbinden den durch die Folien 27 begrenzten Dampf- bzw. Fluidraum 29 der Rahmenelemente 10₆ sechster Art mit den Durchlassöffnungen 14 und 15. Der durch die Membranen 26 begrenzte Dampf- bzw. Fluidraum 29 der Rahmenelemente 10s fünfter Art ist über die Dampf- und/oder Fluiddurchlassöffnung 23 mit dem Dampf- und/oder Fluidkanal 17 verbunden.

Die Funktionsweise eines solchen als Pervaporationsmodul (Pervaporationsstufe) oder Dampferzeuger mit integriertem Heizkreis konfigurierten Stapels ergibt sich aus Folgendem:
Die Fluidräume 29 der Rahmen 10₆ sechster Art werden über die Durchlassöffnungen 14 und 15 mit einem Heizfluid beschickt.

Durch die Flüssigkeitsräume 30 strömt, versorgt durch die Durchlassöffnungen 13 und 16, eine aufzukonzentrierende Flüssigkeit. Diese wird durch das Heizfluid in den Fluidräumen 29 der Rahmenelemente 10₆ sechster Art erhitzt, und Dampf tritt durch die Membran 26 in die Dampfräume 29 der Rahmenelemente 10₅ fünfter Art und von dort weiter durch die Dampfdurchlassöffnungen 23 in den Kanal 17, von wo aus er weitergeleitet wird.

Wird in dieser Konfiguration eine Membran 26 gleich der in der Membrandestillationsstufe verwendet, so funktioniert dieser Stapel als Dampferzeuger mit integriertem Heizkreis.

Verwendet man eine Pervaporationsmembran, die eine selektive Durchlässigkeit in Bezug auf die einzelnen Komponenten des Gemisches aufweist, so lassen sich azeotrope Punkte von Gemischen überwinden, da durch die Pervaporationsmembran eine über die Möglichkeiten der Destillation hinausgehende Selektierung erfolgt.

Ein jeweiliger, mehrere durch Schweißen zusammengefasste Rahmenelemente umfassender Stapel kann an seinen beiden Enden jeweils mit einer Anschlussöffnungen 41, 42 aufweisenden Deckplatte 31, 31' verbunden, insbesondere verschweißt sein (vgl. insbesondere auch die Fig. 12 und 13).

Fig. 12 zeigt in schematischer Darstellung eine beispielhafte Deckplatte 31 mit exemplarischen Anschlussöffnungen 41, 42, die beispielsweise einer Durchlassöffnung 15 bzw. einem Dampf- und/oder Fluidkanal 17 zugeordnet sein können. Diese Deckplatte 31 ist mit einem Unterdruckanschluss 33 versehen. Überdies ist die Deckplatte 31 mit einer die Anschlussöffnungen 41, 42 umschließenden und entlang des Deckelrandes angeordneten Unterdruckdichtung 32 versehen.

Umfassen die Rahmenelemente die bereits erwähnte, durch die Schweißstegstruktur 11 abgetrennte Unterdruckdurchlassöffnung 33a, so kann diese Unterdruckdurchlassöffnung 33a bei den Deckplatten mit dem Unterdruckanschluss 33 fluchten. Durch das Integrieren der zuvor außenliegenden Unterdruckverbindung von Stapel zu Stapel in das Innere der Stapel entfallen die sonst extern benötigten Unterdruckverbindungsleitungen zum Versorgen der Druckplatten mit Unterdruck.

Fig. 13 zeigt beispielhaft die weitere Deckplatte 31' mit den exemplarischen Anschlussöffnungen 41, 42.

Mit den einander gegenüberstehenden, aufeinander folgenden Stapeln zugeordneten Deckplatten 31, 31' können aufeinander folgende Stapel bei minimalem Aufwand zusammengeschlossen werden. Während im vorliegenden Fall lediglich eine der beiden Deckplatten, nämlich die Deckplatte 31 mit einer Unterdruckdichtung 32 versehen ist, kann grundsätzlich auch jeder Deckplatte jeweils eine Dichtung zugeordnet sein. Die beiden Deckplatten 31, 31' werden leicht aneinander gedrückt. Über den Unterdruckanschluss 33 an der Deckplatte 31 gemäß Fig. 12 kann Unterdruck angelegt werden, wodurch die beiden Deckplatten 31, 31' gegeneinander gepresst werden. Dieser Unterdruck teilt sich über die Unterdruckdurchlassöffnungen 33a der Rahmenelemente der nachfolgenden Deckplatte mit, und kann über den Unterdruckanschluss 33 somit den nächsten Stapel mithilfe des Unterdruckes anpressen. Durch die um die Durchlassöffnungen 41,42 umlaufende Dichtung 32 werden die entsprechenden Anschlüsse der beiden Stapel dicht miteinander verbunden. Über unterschiedliche Ausführungen der Durchlassöffnungen lassen sich unterschiedliche Funktionseinheiten wie beispielsweise Dampferzeuger - Membrandestillationsstufe - Membrandestillationsstufe - Membrandestillationsstufe - Kondensator einer Multieffekt-Anlage bei minimalem Aufwand zusammenschließen.

So lassen sich gemäß Fig. 7 beispielsweise Multieffekt-Stufen, d.h. Einzelstufen einer Multieffekt-Membrandestillationsanlage erstellen, indem wechselweise ein beidseitig mit Folie versehenes Rahmenelement 10₁ erster Art gemäß Fig. 1 mit einem beidseitig mit einer Membran versehenen Rahmenelement zweiter Art gemäß Fig. 2 zu einem Stapel und die Enden mit Deckplatten 31, 31' gemäß den Fig. 12 und 13 verschweißt werden. Zwischen jeweils zwei Rahmenelementen ergibt sich durch die Resthöhe der beim Verschweißen abgetragenen Schweißstegstruktur 11 ein mit den Durchlassöffnungen 13 bis 16 verbundener Raum, der auf der einen Seite durch eine Folie 27 und auf der anderen Seite durch eine Membran 26 begrenzt ist.

Die Funktionsweise eines als Multieffekt-Stufe konfigurierten Stapels ergibt sich unter den Betriebsbedingungen einer Multieffekt-Anlage, wie sie beispielsweise in der WO 2007/054311 beschrieben ist, folgendermaßen:
Der Dampf wird in den Dampfkanal 18 eingeleitet und gelangt durch die Dampfdurchlassöffnungen 22 in die Kondensationsräume 28. Durch den Flüssigkeitsraum strömt, versorgt durch die Durchlassöffnungen 13 bis 16, die aufzukonzentrierende Flüssigkeit, wodurch der durch den Dampfkanal 18 eingeleitete Dampf an den Folien 27 kondensiert. Das Kondensat läuft über die Kondensatdurchlassöffnungen 24 in den Kondensatsammelkanal 19. Die auf die aufzukonzentrierende Flüssigkeit übertragene Kondensationsenthalpie bringt diese zum Sieden, und der entstehende Dampf strömt durch die Membran 26 in die Dampfräume 29 und von dort weiter durch die Dampfdurchlassöffnungen 23 in den Kanal 17, von wo aus er dann in die nächste Stufe weitergeleitet wird. Durch die aufzukonzentrierende Flüssigkeit eingeschlepptes Inertgas wird über die Inertgaskanäle 20, 21 und die Inertgasdurchlassöffnungen 25 entsorgt.

Zudem können gemäß Fig. 8 z.B. Dampferzeuger gebildet werden, indem beidseitig mit Membranen versehene Rahmenelemente 10₂ zweiter Art gemäß Fig. 2 und Rahmenelemente 10₄ vierter Art gemäß Fig. 4 wechselweise zu einem Stapel, und die Enden mit Deckplatten gemäß den Fig. 12 und 11 verschweißt werden. Die Rahmenelemente 10₄ vierter Art gemäß Fig. 4 erweitern den in diesem Fall durch zwei Membranen 26 begrenzten Flüssigkeitsraum 30 gemäß Fig. 7 um eine Rahmendicke, so dass durch diesen Flüssigkeitsraum ein wesentlich höherer Volumenstrom der aufzukonzentrierenden Flüssigkeit strömen kann. Dies ist erforderlich, da die Verdampfungsenthalpie durch sensible Wärme bereitgestellt werden muss.

Die Funktionsweise eines solchen Dampferzeugers ergibt sich aus Folgendem:
Durch den Flüssigkeitsraum strömt, versorgt durch die Durchlassöffnungen 13 bis 16, die aufgeheizte Flüssigkeit und siedet druckbedingt. Der entstehende Dampf strömt durch die Membran 26 in die Dampfräume 29 und von dort weiter durch die Dampfdurchlassöffnungen 22 in den Kanal 17, von wo aus er dann weitergeleitet wird.

Zudem können gemäß Fig. 9 z.B. Kondensatoren gebildet werden, indem beidseitig mit Folie versehene Rahmenelemente 10₁ erster Art gemäß Fig. 1 und Rahmenelemente 10₄ vierter Art gemäß Fig. 4 wechselweise zu einem Stapel und die Enden mit Deckplatten 31, 31' gemäß den Fig. 12 und 11 verschweißt werden. Die Rahmenelemente 10₄ vierer Art gemäß Fig. 4 erweitern den in diesem Fall durch zwei Folien 27 begrenzten Flüssigkeitsraum 30 gemäß Fig. 7 um eine Rahmendicke, so dass durch diesen Flüssigkeitsraum ein wesentlich höherer Volumenstrom der Kühlflüssigkeit strömen kann. Dies ist von besonderem Vorteil, da die Kondensationsenthalpie durch sensiblen Wärmeübertrag abgeführt werden muss.

Die Funktionsweise eines solchen Kondensators ergibt sich aus Folgendem:
Durch den Flüssigkeitsraum strömt, versorgt durch die Durchlassöffnungen 13 bis 16, die Kühlflüssigkeit. Der Dampf wird in den Dampfkanal 18 eingeleitet und gelangt durch die Dampfdurchlassöffnungen 22 in die Kondensationsräume 28. Der Dampf kondensiert an den Folien 27, und das Kondensat läuft über die Kondensatdurchlassöffnungen 24 in den Kondensatsammelkanal 19. Durch den Dampf eingeschlepptes Inertgas wird über die Inertgaskanäle 20, 12 und die Inertgasdurchlassöffnungen 25 entsorgt.

Gemäß Fig. 10 können z.B. Wärmetauscher gebildet werden, indem beidseitig mit Folie versehene Rahmenelemente 10₃ dritter Art gemäß Fig. 3 und Rahmenelemente 10₄ vierter Art gemäß Fig. 4 wechselweise zu einem Stapel und die Enden mit Deckplatten gemäß den Fig. 12 und 13 verschweißt werden. Die Rahmenelemente 10₄ vierter Art gemäß Fig. 4 erweitern die in diesem Fall durch zwei Folien 27 begrenzten Flüssigkeitsräume 30 aus Fig. 7 um eine Rahmendicke, so dass durch diese Flüssigkeitsräume ein wesentlich höherer Volumenstrom strömen kann.

Die Funktionsweise eines solchen Wärmetauschers ergibt sich aus Folgendem:
Durch den Flüssigkeitsraum strömt, versorgt durch die Durchlassöffnungen 13 bis 16, eine Flüssigkeit. Durch die Rahmenelemente 10₃ dritter Art gemäß Fig. 3 strömt über die Kanäle 17 und 18 durch die Durchlassöffnungen 22 und 23 eine zweite Flüssigkeit. Die Wärme wird durch die Folien 27 zwischen den Flüssigkeiten getauscht.

Zudem können gemäß Fig. 10 beispielsweise auch Filter gebildet werden, indem beidseitig mit Filtermembranen versehene Rahmenelemente 10₃ dritter Art gemäß Fig. 3 und Rahmenelemente 10₄ vierter Art gemäß Fig. 4 wechselweise zu einem Stapel und die Enden mit Deckplatten gemäß den Fig. 12 und 13 verschweißt werden. Die Grundkonstruktion folgt der der Wärmetauscherkonstruktion, wobei jedoch anstatt der Folien Filtermembranen aufgebracht sind. Durch die Anschlüsse analog dem Wärmetauscher lässt sich der Filter leicht rückspülen, wobei auch eine Teilentnahme aus dem zu filternden Medium möglich ist, wodurch die Filterlebensdauer verlängert wird.

Zudem können, wie bereits ausgeführt, beispielsweise auch Pervaporationsstufen oder -module gebildet werden (vgl. Fig. 11), indem beidseitig mit einer Pervaporationsmembran versehene Rahmenelemente wechselweise mit mit Folien versehenen Rahmenelementen zu einem Stapel und die Enden mit Deckplatten gemäß den Fig. 12 und 13 verschweißt werden. Eine Pervaporationsmembran wird beispielsweise eingesetzt, um bei der Trennung von Mehrstoffgemischen, wie beispielsweise Alkohol und Wasser, den azeotropen Punkt zu überwinden, der sich mit herkömmlichen Destillationsverfahren nicht überwinden lässt. Die Pervaporationsmembran ist nur für die Gasphase eines Stoffes durchlässig, wie beispielsweise die von Wasser. Das Gemisch strömt erwärmt durch den Flüssigkeitsraum, der auf einer Seite von einer Pervaporationsmembran und auf der anderen Seite von einer Folie begrenzt wird. Durch die mit Folien versehenen Rahmenelemente fließt ein Heizmedium, das über die Folie das Gemisch aufheizt. Durch den Dampfdruck strömt die eine Gasphase durch die Pervaporationsmembran in den Dampfraum des mit Membran versehenen Rahmens, und wird von dort über die Dampfdurchlassöffnung 23 und den Dampfkanal 17 entsorgt, so dass das Gemisch in Bezug auf den nicht durchgelassenen Anteil aufkonzentriert wird.

### Bezugszeichenliste

- 10₁: Rahmenelement erster Art
- 10₂: Rahmenelement zweiter Art
- 10₃: Rahmenelement dritter Art
- 10₄: Rahmenelement vierter Art
- 10₅: Rahmenelement fünfter Art
- 10₆: Rahmenelement sechster Art
- 11: Schweißstegstruktur
- 11a: Schweißstegteilstück
- 11b: Schweißstegteilstück
- 12: insbesondere gitterartiger Abstandshalter
- 13: Durchlassöffnung
- 14: Durchlassöffnung
- 14a: Durchlassöffnungsdurchbruch
- 15: Durchlassöffnung
- 15a: Durchlassöffnungsdurchbruch
- 16: Durchlassöffnung
- 17: Dampf- und/oder Fluidkanal
- 18: Dampf- und/oder Fluidkanal
- 19: Kondensatsammelkanal
- 20: Inertgaskanal, weiterer Kanal
- 21: Inertgaskanal, weiterer Kanal
- 22: Dampf- und/oder Fluiddurchlassöffnung
- 23: Dampf- und/oder Fluiddurchlassöffnung
- 24: Kondensatdurchlassöffnung
- 25: Inertgasdurchlassöffnung
- 26: Membran
- 27: Folie
- 28: Kondensationsraum
- 29: Dampf- bzw. Fluidraum
- 30: Flüssigkeitsraum
- 31: Deckplatte
- 31': Deckplatte
- 32: Unterdruckdichtung
- 33: Unterdruckanschluss
- 33a: Unterdruckdurchlassöffnung
- 34: Inertgasverbindung
- 35: Membrandestillationsstufe, insbesondere Multieffekt-Membrandestillationsstufe
- 36: Dampferzeuger
- 37: Kondensator
- 38: Wärmetauscher
- 39: äußerer Rahmen
- 40: zentraler Innenbereich
- 41: Anschlussöffnung
- 42: Anschlussöffnung
- 43: Innenbereich
- 44: U-Rohr

## Patentansprüche

1. Modulares Strömungssystem mit einer Mehrzahl von Rahmenelementen (10₁ bis 10₆), die zur Bildung unterschiedlicher Funktionseinheiten wie insbesondere einer Membrandestillationsstufe (35), eines Dampferzeugers (36), eines Kondensators (37), eines Wärmetauschers (38), eines Filters und/oder einer Pervaporationsstufe über Schweißstegstrukturen (11) zu unterschiedlichen, jeweils wenigstens zwei, insbesondere jeweils wenigstens zehn Rahmenelemente umfassenden Stapeln zusammenfassbar sind, wobei die Rahmenelemente (10₁ bis 10₆) jeweils einen mit Durchlassöffnungen (13 bis 16) und Dampf- und/oder Fluidkanälen (17, 18) versehenen äußeren Rahmen (39) und einen vom äußeren Rahmen (39) umschlossenen zentralen Innenbereich (40) umfassen und beidseitig jeweils mit einer Schweißstegstruktur (11) versehen sind, die einerseits einen die Durchlassöffnungen (13 bis 16) sowie den zentralen Innenbereich (40) umfassenden Bereich und andererseits zumindest zwei jeweils einen Dampf- und/oder Fluidkanal (17, 18) umfassende Bereiche abgrenzt.

2. Modulares Strömungssystem nach Anspruch 1,
**dadurch gekennzeichnet,**
**dass** der zentrale Innenbereich (40) eines jeweiligen Rahmenelements (10₁ bis 10₆) mit einem insbesondere gitterartigen Abstandshalter (12) versehen ist.

3. Modulares Strömungssystem nach Anspruch 2,
**dadurch gekennzeichnet,**
**dass** auf den beiden Seiten des insbesondere gitterartigen Abstandshalters (12) jeweils eine Folie (27) oder Membran (26) angeordnet, insbesondere aufgeschweißt ist.

4. Modulares Strömungssystem nach Anspruch 4,
**dadurch gekennzeichnet,**
**dass** eine jeweilige Folie (27) bzw. Membran (26) den gesamten insbesondere gitterartigen Abstandshalter (12) überdeckt, die Durchlassöffnungen (13 bis 16) jedoch freigehalten sind.

5. Modulares Strömungssystem nach einem der vorhergehenden Ansprüche,
**dadurch gekennzeichnet,**
**dass** auf einander gegenüberliegenden Seiten eines jeweiligen Rahmenelements (10₁ bis 10₆) jeweils wenigstens ein Dampf- und/oder Fluidkanal (17, 18) vorgesehen ist.

6. Modulares Strömungssystem nach Anspruch 5,
**dadurch gekennzeichnet,**
**dass** die auf einer jeweiligen Seite vorgesehenen Dampf- und/oder Fluidkanäle (17, 18) der zu einem jeweiligen Stapel zusammengefassten Rahmenelemente miteinander fluchten.

7. Modulares Strömungssystem nach einem der vorhergehenden Ansprüche,
**dadurch gekennzeichnet,**
**dass** es wenigstens ein Rahmenelement (10₁) erster Art umfasst, das auf einer ersten und einer dieser gegenüberliegenden zweiten Seite jeweils einen Dampf- und/oder Fluidkanal (17 bzw. 18), eine den Dampf- und/oder Fluidkanal (18) auf der zweiten Seite mit dem zentralen Innenbereich (40) verbindende Dampf- und/oder Fluiddurchlassöffnung (22) und insbesondere auf der Unterseite eine Kondensatdurchlassöffnung (24) umfasst, über die der zentrale Innenbereich (40) mit einem durch die Schweißstegstruktur (11) begrenzten Kondensatsammelkanal (19) verbunden ist, und bei dem insbesondere zur Bildung eines Kondensationsraumes (28) beidseitig des insbesondere gitterartigen Abstandshalters (12) innerhalb der Schweißstegstruktur (11) jeweils eine Folie (27) so angeordnet ist, dass die Durchlassöffnungen (13 bis 16) frei bleiben, wobei vorzugsweise der äußere Rahmen (39) auf einander gegenüber liegenden Seiten jeweils einen durch die Schweißstegstruktur (11) abgegrenzten Inertgaskanal (20, 21) umfasst, wobei wenigstens ein, vorzugsweise beide Inertgaskanäle (20, 21) jeweils über eine Inertgasdurchlassöffnung (25) mit dem zentralen Innenbereich (40) bzw. Kondensationsraum (28) verbunden sind, und vorzugsweise eine durch die Schweiß struktur (11) abgegrenzte Unterdruckdurchlassöffnung (33a) umfasst.

8. Modulares Strömungssystem nach einem der vorhergehenden Ansprüche,
**dadurch gekennzeichnet,**
**dass** es wenigstens ein Rahmenelement (10₂) zweiter Art umfasst, das auf einer ersten und einer dieser gegenüberliegenden zweiten Seite jeweils einen Dampf- und/oder Fluidkanal (17 bzw. 18) und eine den Dampf- und/oder Fluidkanal (17) auf der ersten Seite mit dem zentralen Innenbereich (40) verbindende Dampf- und/oder Fluiddurchlassöffnung (23) umfasst und bei dem insbesondere zur Bildung eines Dampf- bzw. Fluidraumes (29) beidseitig des insbesondere gitterartigen Abstandshalters (12) innerhalb der Schweißstegstruktur (11) jeweils eine wasserdichte, dampfdurchlässige Membran (26) so angeordnet ist, dass die Durchlassöffnungen (13 bis 16) frei bleiben, wobei vorzugsweise der äußere Rahmen (39) auf einander gegenüber liegenden Seiten jeweils einen durch die Schweißstegstruktur (11) abgegrenzten Inertgaskanal (20, 21) und vorzugsweise eine durch die Schweißstegstruktur (11) abgegrenzte Unterdruckdurchlassöffnung (33a) umfasst und die Inertgaskanäle (20, 21) jeweils vom zentralen Innenbereich (40) getrennt sind.

9. Modulares Strömungssystem nach einem der vorhergehenden Ansprüche,
**dadurch gekennzeichnet,**
**dass** es wenigstens ein Rahmenelement (10₃) dritter Art umfasst, das auf einer ersten und einer dieser gegenüberliegenden zweiten Seite jeweils einen Dampf- und/oder Fluidkanal (17 bzw. 18), eine den Dampf- und/oder Fluidkanal (17) auf der ersten Seite mit dem zentralen Innenbereich (40) verbindende Dampf- und/oder Fluiddurchlassöffnung (23) und eine den Dampf- und/oder Fluidkanal (18) auf der zweiten Seite mit dem zentralen Innenbereich (40) verbindende Dampf- und/oder Fluiddurchlassöffnung (22) umfasst und bei dem insbesondere zur Bildung eines Dampf- bzw. Fluidraumes (29) beidseitig des insbesondere gitterartigen Abstandshalters (12) innerhalb der Schweißstegstruktur (11) jeweils eine Membran (26) oder Folie (27) so angeordnet ist, dass die Durchlassöffnungen (13 bis 16) frei bleiben, wobei vorzugsweise der äußere Rahmen (39) auf einander gegenüber liegenden Seiten jeweils einen durch die Schweißstegstruktur (11) abgegrenzten Inertgaskanal (20, 21) und vorzugsweise eine durch die Schweißstegstruktur (11) abgegrenzte Unterdruckdurchlassöffnung (33a) umfasst und die Inertgaskanäle (20, 21) jeweils vom zentralen Innenbereich (40) getrennt sind.

10. Modulares Strömungssystem nach einem der vorhergehenden Ansprüche,
**dadurch gekennzeichnet,**
**dass** es wenigstens ein Rahmenelement (10₄) vierter Art umfasst, das auf einer ersten und einer dieser gegenüberliegenden zweiten Seite jeweils einen Dampf- und/oder Fluidkanal (17 bzw. 18) umfasst, wobei der insbesondere gitterartige Abstandshalter (12) weder mit einer Folie noch mit einer Membran versehen ist, wobei vorzugsweise der äußere Rahmen (39) auf einander gegenüber liegenden Seiten jeweils einen durch die Schweißstegstruktur (11) abgegrenzten weiteren Kanal, insbesondere Inertgaskanal (20, 21), und vorzugsweise eine durch die Schweißstegstruktur (11) abgegrenzte Unterdruckdurchlassöffnung (33a) umfasst und die weiteren Kanäle bzw. Inertgaskanäle (20, 21) jeweils vom zentralen Innenbereich (40) getrennt sind.

11. Modulares Strömungssystem nach einem der vorhergehenden Ansprüche,
**dadurch gekennzeichnet,**
**dass** es wenigstens ein Rahmenelement (10₅) fünfter Art umfasst, das auf einer ersten und einer dieser gegenüberliegenden zweiten Seite jeweils einen Dampf- und/oder Fluidkanal (17 bzw. 18) und eine den Dampf- und/oder Fluidkanal (17) auf der ersten Seite mit dem zentralen Innenbereich (40) verbindende Dampf- und/oder Fluiddurchlassöffnung (23) umfasst und bei dem insbesondere zur Bildung eines Dampf- bzw. Fluidraumes (29) beidseitig des insbesondere gitterartigen Abstandshalters (12) innerhalb der Schweißstegstruktur (11) jeweils eine wasserdichte, dampfdurchlässige Membran (26) so angeordnet ist, dass die Durchlassöffnungen (13 bis 16) frei bleiben, wobei vorzugsweise der äußere Rahmen (39) insbesondere eine durch die Schweißstegstruktur (11) abgegrenzte Unterdruckdurchlassöffnung (33a) und auf einander gegenüber liegenden Seiten jeweils einen durch die Schweißstegstruktur (11) abgegrenzten Inertgaskanal (20, 21) umfasst und diese Inertgaskanäle (20, 21) jeweils vom zentralen Innenbereich (40) getrennt sind, und wobei die Durchlassöffnungen (13 bis 16) wenigstens zwei erste Durchlassöffnungen (14, 15) und wenigstens zwei weitere Durchlassöffnungen (13, 16) umfassen und die Schweißstegstruktur (11) mit zusätzlichen Schweißstegteilstücken (11a, 11b) versehen ist, um die ersten Durchlassöffnungen (14, 15) gegenüber den weiteren Durchlassöffnungen (13, 16) abzugrenzen.

12. Modulares Strömungssystem nach einem der vorhergehenden Ansprüche,
**dadurch gekennzeichnet,**
**dass** es wenigstens ein Rahmenelement (10₆) sechster Art umfasst, das auf einer ersten und einer dieser gegenüberliegenden zweiten Seite jeweils einen Dampf- und/oder Fluidkanal (17 bzw. 18) umfasst, wobei beidseitig des insbesondere gitterartigen Abstandshalters (12) innerhalb der Schweißstegstruktur (11) jeweils eine Folie (27) so angeordnet ist, dass die Durchlassöffnungen (13 bis 16) frei bleiben, wobei vorzugsweise der äußere Rahmen (39) insbesondere eine durch die Schweißstegstruktur (11) abgegrenzte Unterdruckdurchlassöffnung (33a) und auf einander gegenüber liegenden Seiten jeweils einen durch die Schweißstegstruktur (11) abgegrenzten weiteren Kanal, insbesondere Inertgaskanal (20, 21), umfasst und diese weiteren Kanäle bzw. Inertgaskanäle (20, 21) jeweils vom zentralen Innenbereich (40) getrennt sind, und wobei die Durchlassöffnungen (13 bis 16) wenigstens zwei erste Durchlassöffnungen (14, 16) und wenigstens zwei weitere Durchlassöffnungen (13, 16) umfassen, die Schweißstegstruktur (11) mit zusätzlichen Schweißstegteilstücken (11a, 11b) versehen ist, um die ersten Durchlassöffnungen (14, 15) gegenüber den weiteren Durchlassöffnungen (13, 16) abzugrenzen, und der äußere Rahmen (39) mit Durchlassöffnungsdurchbrüchen (14a, 15a) versehen ist, über die der durch die Folien (27) begrenzte Dampf- bzw. Fluidraum (29) mit den ersten Durchlassöffnungen (14, 15) verbunden ist.

13. Modulares Strömungssystem nach einem der vorhergehenden Ansprüche,
**dadurch gekennzeichnet,**
**dass** ein mehrere durch Schweißen zusammengefasste Rahmenelemente (10₁ bis 10₆) umfassender Stapel an seinen beiden Enden jeweils mit einer Anschlussöffnungen (41, 42) aufweisenden Deckplatte (31, 31') verbunden, insbesondere verschweißt ist, wobei vorzugsweise wenigstens eine der beiden Deckplatten (31, 31') mit einem Unterdruckanschluss (33) versehen ist.

14. Modulares Strömungssystem nach Anspruch 12 oder 13,
**dadurch gekennzeichnet,**
**dass** wenigstens eine der beiden Deckplatten (31, 31') mit einer die Anschlussöffnungen (41, 42) umschließenden und am Deckelrand angeordneten Unterdruckdichtung (32) versehen ist.

15. Modulares Strömungssystem nach einem der vorhergehenden Ansprüche,
**dadurch gekennzeichnet,**
**dass** zur Bildung einer Membrandestillationsstufe (35) ein wenigstens zwei, insbesondere wenigstens zehn Rahmenelemente umfassender Stapel vorgesehen ist, in dem wechselweise Rahmenelemente (10₁, 10₂) erster und zweiter Art enthalten sind, dass zur Bildung eines Dampferzeugers (36) ein wenigstens zwei, insbesondere wenigstens zehn Rahmenelemente umfassender Stapel vorgesehen ist, in dem wechselweise Rahmenelemente (10₂, 10₄) zweiter und vierter Art enthalten sind, dass zur Bildung eines Kondensators (37) ein wenigstens zwei, insbesondere wenigstens zehn Rahmenelemente umfassender Stapel vorgesehen ist, in dem wechselweise Rahmenelemente (10₁, 10₄) erster und vierter Art enthalten sind, dass zur Bildung eines Wärmetauschers (38) ein wenigstens zwei, insbesondere wenigstens zehn Rahmenelemente umfassender Stapel vorgesehen ist, in dem wechselweise Rahmenelemente (10₃, 10₄) dritter und vierter Art enthalten sind, dass zur Bildung eines Filters ein mehrere Rahmenelemente umfassender Stapel vorgesehen ist, in dem wechselweise jeweils beidseitig mit Filtermembranen versehene Rahmenelemente (10₃, 10₄) dritter und vierter Art enthalten sind, und/oder dass zur Bildung einer Pervaporationsstufe ein mehrere Rahmenelemente umfassender Stapel vorgesehen ist, in dem wechselweise beidseitig mit Pervaporationsmembranen (26) und beidseitig mit Folien (27) versehene Rahmenelemente, insbesondere Rahmenelemente (10₅, 10₆) fünfter und sechster Art, enthalten sind.

## Claims

1. A modular flow system having a plurality of frame elements (10₁ to 10₆) which can be combined together via welding web structures (11) to form different stacks including in each case at least two frame elements, in particular at least ten frame elements, for forming different functional members such as in particular a membrane distillation stage (35), a vapor generator (36), a condenser (37), a heat exchanger (38), a filter and/or a pervaporation stage, wherein the frame elements (10₁ to 10₆) each include an outer frame (39) provided in each case with passage openings (13 to 16) and with vapor and/or fluid passages (17, 18) and a central inner region (40) surrounded by the outer frame (39) and are provided at both sides with a respective welding web structure (11) which, on the one hand, defines a region including the passage openings (13 to 16) and the central inner region (40) and, on the other hand, defines at least two regions each including a vapor and/or fluid passage (17, 18).

2. A modular flow system in accordance with claim 1,
**characterized in that**
the central inner region (40) of a respective frame element (10₁ to 10₆) is provided with a spacer, in particular a grid-like spacer (12).

3. A modular flow system in accordance with claim 2,
**characterized in that**
a respective film (27) or membrane (26) is arranged, in particular welded, on the two sides of the spacer, in particular of the grid-like spacer (12).

4. A modular flow system in accordance with claim 4,
**characterized in that**
a respective film (27) or membrane (26) covers the total spacer, in particular the total grid-like spacer (12), but the passage openings (13 to 16) are kept free.

5. A modular flow system in accordance with any one of the preceding claims,
**characterized in that**
a respective at least one vapor and/or fluid passage (17, 18) is provided on mutually opposite sides of a respective frame element (10₁ to 10₆).

6. A modular flow system in accordance with claim 5,
**characterized in that**
the vapor and/or fluid passages (17, 18) provided on a respective side of the frame elements combined to form a respective stack are aligned with one another.

7. A modular flow system in accordance with any one of the preceding claims,
**characterized in that**
it includes at least one frame element (10₁) ) of a first kind which includes on a first side and on a second side disposed opposite it a respective vapor and/or fluid passage (17 or 18 respectively), a vapor and/or fluid passage opening (22) connecting the vapor and/or fluid passage (18) on the second side to the central inner region (40) and in particular a condensate passage opening (24) at the lower side via which the central inner region (40) is connected to a condensate collection passage (19) bounded by the welding web structure (11) and in which a respective film (27) is arranged within the welding web structure (11) at both sides of the in particular grid-like spacer (12) in particular for forming a condensation space (28) such that the passage openings (13 to 16) remain free, with the outer frame (39) on mutually oppositely disposed sides preferably each including an inert gas passage (20, 21) defined by the welding web structure (11), with at least one inert gas passage, preferably both inert gas passages (20, 21) each being connected to the central inner region (40) or to the condensation space (28) via an inert gas passage opening (25) and preferably including a vacuum passage opening (33a) defined by the welding structure (11).

8. A modular flow system in accordance with any one of the preceding claims,
**characterized in that**
it includes at least one frame element (10₂) of a second kind which includes on a first side and on a second side disposed opposite it a respective vapor and/or fluid passage (17 and 18 respectively) and a vapor and/or fluid passage opening (23) connecting the vapor and/or fluid passage (17) on the first side to the central inner region (40) and in which a respective water-tight, vapor-permeable membrane (26) is arranged within the welding web structure (11) at both sides of the in particular grid-like spacer (12) in particular for forming a vapor or fluid space (29) such that the passage openings (13 to 16) remain free, with the outer frame (39) preferably including on mutually opposite sides a respective inert gas passage (20, 21) defined by the welding web structure (11) and preferably a vacuum passage opening (33a) defined by the welding web structure (11) and the inert gas passages (20, 21) each being separated from the central inner region (40).

9. A modular flow system in accordance with any one of the preceding claims,
**characterized in that**
it includes at least one frame element (10₃) of a third kind which includes on a first side and on a second side disposed opposite it a respective vapor and/or fluid passage (17 and 18 respectively), a vapor and/or fluid passage opening (23) connecting the vapor and/or fluid passage (17) on the first side to a central inner region (40) and a vapor and/or fluid passage opening (22) connecting the vapor and/or fluid passage (18) on the second side to a central inner region (40) and in which a respective membrane (26) or film (27) is arranged within the welding web structure (11) at both sides of the in particular grid-like spacer (40) in particular for forming a vapor or fluid space (29) such that the passage openings (13 to 16) remain free, with the outer frame (39) preferably including on mutually opposite sides a respective inert gas passage (20, 21) defined by the welding web structure (11) and preferably a vacuum passage opening (33a) defined by the welding web structure (11) and the inert gas passages (20, 21) each being separated from the central inner region (40).

10. A modular flow system in accordance with any one of the preceding claims,
**characterized in that**
it includes at least one frame element (10₄) of a fourth kind which includes on a first side and on a second side disposed opposite it a respective vapor and/or fluid passage (17 and 18 respectively), with the in particular grid-like spacer (12) not being provided either with a film or with a membrane, with the outer frame (39) preferably including on mutually oppositely disposed sides a respective further passage, in particular an inert gas passage (20, 21) defined by the welding web structure (11) and preferably including a vacuum passage opening (33a) defined by the welding web structure (11) and the further passages or inert gas passages (20, 21) each being separated from the central inner region (40).

11. A modular flow system in accordance with any one of the preceding claims,
**characterized in that**
it includes at least one frame element (10₅) of a fifth kind which includes on a first side and on a second side disposed opposite it a respective vapor and/or fluid passage (17 and 18 respectively) and a vapor and/or fluid passage opening (23) connecting the vapor and/or fluid passage (17) on the first side to the central inner region (40) and in which a respective water-tight, vapor-permeable membrane (26) is arranged within the welding web structure (11) at both sides of the in particular grid-like spacer (12) in particular for forming a vapor or fluid space (29) such that the passage openings (13 to 16) remain free, with the outer frame (39) preferably in particular including a vacuum passage opening (33a) defined by the welding web structure (11) and on mutually opposite sides a respective inert gas passage (20, 21) defined by the welding web structure (11) and these inert gas passages (20, 21) respectively being separated from the central inner region (40), and with the passage openings (13 to 16) including at least two first passage openings (14, 15) and at least two further passage openings (13, 16) and the welding web structure (11) being provided with additional welding web part pieces (11a, 11b) to define the first passage openings (14, 15) with respect to the further passage openings (15, 16).

12. A modular flow system in accordance with any one of the preceding claims,
**characterized in that**
it includes at least one frame element (10₆) of a sixth kind which includes on a first side and on a second side opposite it a respective vapor and/or fluid passage (17 and 18 respectively), with a respective film (27) being arranged within the welding web structure (11) at both sides of the in particular grid-like spacer (12) such that the passage openings (13 to 16) remain free, with the outer frame (39) in particular preferably including a vacuum passage opening (33a) defined by the welding web structure (11) and on respectively oppositely disposed sides a respective further passage, in particular an inert gas passage (20, 21), defined by the welding web structure (11) and these further passages or inert gas passages (20, 21) each being separated from the central inner region (40), and with the passage openings (13 to 16) including at least two first passage openings (14, 16) and at least two further passage openings (13, 16), the welding web structure (11) being provided with additional welding web part pieces (11a, 11b) to define the first passage openings (14, 15) with respect to the further passage openings (13, 16) and the outer frame (39) being provided with passage opening breakthroughs (14a, 15a) via which the vapor or fluid space (29) bounded by the films (27) is connected to the first passage openings (14, 15).

13. A modular flow system in accordance with any one of the preceding claims,
**characterized in that**
a stack including a plurality of frame elements (10₁ to 10₆) combined together by welding is connected, in particular welded, at its two ends in each case to a cover plate (31, 31') having connection openings (41, 42), with at least one of the two cover plates (31, 31') preferably being provided with a vacuum connection (33).

14. A modular flow system in accordance with claim 12 or claim 13,
**characterized in that**
at least one of the two cover plates (31, 31') is provided with a vacuum seal (32) surrounding the connection openings (41 42) and arranged at the cover margin.

15. A modular flow system in accordance with any one of the preceding claims,
**characterized in that**
a stack including at least two frame elements, in particular at least ten frame elements, is provided for forming a membrane distillation stage (35) in which frame elements (10₁, 10₂) of the first and second kind are contained alternately; **in that** a stack including at least two frame elements, in particular at least ten frame elements, is provided for forming a vapor generator (36) in which frame elements (10₂, 10₄) of the second and fourth kind are alternately contained; **in that** a stack including at least two frame elements, in particular at least ten frame elements, is provided for forming a condenser (37) in which frame elements (10₁, 10₄) of the first and fourth kind are alternately contained; **in that** a stack including at least two frame elements, in particular at least ten frame elements, is provided for forming a heat exchanger (38) in which frame elements (10₃, 10₄) of the third and fourth kind are alternately contained; **in that** a stack including a plurality of frame elements is provided for forming a filter in which frame elements (10₃, 10₄) of the third and fourth kind provided at both respective sides with filter membranes are alternately contained; and/or **in that** a stack including a plurality of frame elements is provided for forming a pervaporation stage in which frame elements, in particular frame elements (10₅, 10₆) of the fifth and sixth kind, are contained and are alternately provided at both sides with pervaporation membranes (26) and at both sides with films (27).

## Revendications

1. Système d'écoulement modulaire comprenant une pluralité d'éléments de cadre (10₁ à 10₆) qui sont susceptibles d'être regroupés pour former des unités fonctionnelles différentes, comme en particulier un étage de distillation à membrane (35), un générateur de vapeur (36), un condenseur (37), un échangeur de chaleur (38), un filtre et/ou un étage de pervaporation, via des structures à entretoises soudées (11) pour donner des empilements différents comprenant respectivement au moins deux, et en particulier respectivement au moins dix éléments de cadre, dans lequel les éléments de cadre (10₁ à 10₆) comprennent chacun un cadre extérieur (39) pourvu d'ouvertures traversantes (13 à 16) et de canaux à vapeur et/ou à fluide (17, 18), et une zone intérieure centrale (40) enfermée par le cadre extérieur (39), et sont dotés sur les deux côtés respectivement d'une structure à entretoises soudées (11), qui délimite d'une part une zone qui inclut les ouvertures traversantes (13 à 16) ainsi que la zone intérieure centrale (40), et qui délimite d'autre part au moins deux zones incluant chacune un canal à vapeur et/ou à fluide (17, 18).

2. Système d'écoulement modulaire selon la revendication 1, **caractérisé en ce que** la zone intérieure centrale (40) d'un élément de cadre respectif (10₁ à 10₆) est pourvue d'un élément d'écartement (12) en particulier semblable à une grille.

3. Système d'écoulement modulaire selon la revendication 2, **caractérisé en ce qu'**une feuille (27) ou une membrane (26) est agencée respectivement sur les deux côtés de l'élément d'écartement (12), en particulier semblable à une grille, et est en particulier soudée.

4. Système d'écoulement modulaire selon la revendication 4, **caractérisé en ce qu'**une feuille (27) ou une membrane (26) respective couvre la totalité de l'élément d'écartement (12), en particulier semblable à une grille, mais **en ce que** les ouvertures traversantes (13 à 16) sont maintenues dégagées.

5. Système d'écoulement modulaire selon l'une des revendications précédentes,
**caractérisé en ce qu'**un canal à vapeur et/ou à fluide (17, 18) est prévu respectivement sur les côtés opposés d'un élément de cadre (10₁ à 10₆) respectif.

6. Système d'écoulement modulaire selon la revendication 5,
**caractérisé en ce que** les canaux à vapeur et/ou à fluide (17, 18) prévus sur un côté respectif des éléments de cadre regroupés pour donner un empilement respectif, sont mutuellement en alignement.

7. Système d'écoulement modulaire selon l'une des revendications précédentes,
**caractérisé en ce qu'**il inclut au moins un élément de cadre (10₁) d'un premier type, qui comporte sur un premier côté et sur un second côté opposé à celui-ci respectivement un canal à vapeur et/ou à fluide (17 ; 18), une ouverture traversante à vapeur et/ou à fluide (22) qui relie le canal à vapeur et/ou à fluide (18) sur le second côté avec la zone intérieure centrale (40), et en particulier une ouverture traversante pour condensat (24) sur le côté inférieur, via laquelle la zone intérieure centrale est reliée avec un canal de collecte de condensat (19) délimité par la structure à entretoises soudées (11), et dans lequel, en particulier pour réaliser une chambre de condensation (28), une feuille respective (27) est agencée des deux côtés de l'élément d'écartement (12), en particulier semblable à une grille, à l'intérieur de la structure à entretoises soudées (11), de telle façon que les ouvertures traversantes (13 à 16) restent dégagées, et dans lequel de préférence le cadre extérieur (39) comporte sur les côtés mutuellement opposés respectivement un canal à gaz inerte (20, 21) délimité par la structure à entretoises soudées (11), dans lequel au moins un et de préférence les deux canaux à gaz inerte (20, 21) est/sont relié(s) via une ouverture traversante à gaz inerte (25) avec la zone intérieure centrale (40) respectivement la chambre de condensation (28), et inclut de préférence une ouverture traversante en dépression (33a) délimitée par la structure à entretoises soudées (11).

8. Système d'écoulement modulaire selon l'une des revendications précédentes,
**caractérisé en ce qu'**il inclut au moins un élément de cadre (10₂) d'un second type, qui comporte sur un premier et sur un second côté opposé à celui-ci respectivement un canal à vapeur et/ou à fluide (17 ; 18) et une ouverture traversante à vapeur et/ou à fluide (23) qui relie le canal à vapeur et/ou à fluide (17) sur le premier côté avec la zone intérieure centrale (40), et dans lequel, en particulier pour réaliser une chambre à vapeur ou à fluide (29) des deux côtés de l'élément d'écartement (12), en particulier semblable à une grille, une membrane étanche à l'eau et perméable à la vapeur (26) est agencée respectivement à l'intérieur de la structure à entretoises soudées (11) de telle manière que les ouvertures traversantes (13 à 16) restent dégagées, et dans lequel de préférence le cadre extérieur (39) comporte sur les côtés mutuellement opposés respectivement un canal à gaz inerte (20, 21) délimité par la structure à entretoises soudées (11), et de préférence une ouverture traversante en dépression (33a) délimitée par la structure à entretoises soudées (11), et les canaux à gaz inerte (20, 21) sont respectivement séparés de la zone intérieure centrale (40).

9. Système d'écoulement modulaire selon l'une des revendications précédentes,
**caractérisé en ce qu'**il inclut au moins un élément de cadre (10₃) d'un troisième type, qui comporte sur un premier côté et sur un second côté opposé à celui-ci respectivement un canal à vapeur et/ou à fluide (17 ; 18), une ouverture traversante à vapeur et/ou à fluide (23) qui relie le canal à vapeur et/ou à fluide (17) sur le premier côté avec la zone intérieure centrale (40), et une ouverture traversante à vapeur et/ou à fluide qui relie le canal à vapeur et/ou à fluide (18) sur le second côté avec la zone intérieure centrale (40) et dans lequel, en particulier pour réaliser une chambre à vapeur ou à fluide (29), une membrane (26) ou une feuille (27) est agencée respectivement des deux côtés de l'élément d'écartement (12), en particulier semblable à une grille, à l'intérieur de la structure à entretoises soudées (11), de telle façon que les ouvertures traversantes (13 à 16) restent dégagées, et dans lequel de préférence le cadre extérieur (39) comporte sur des côtés mutuellement opposés respectivement un canal à gaz inerte (20, 21) délimité par la structure à entretoises soudées (11), et de préférence une ouverture traversante sous dépression (33a) délimitée par la structure à entretoises soudées (11), et les canaux à gaz inerte (20, 21) sont respectivement séparés de la zone intérieure centrale (40).

10. Système d'écoulement modulaire selon l'une des revendications précédentes,
**caractérisé en ce qu'**il inclut au moins un élément de cadre (10₄) d'un quatrième type qui comporte sur un premier côté et sur un second côté opposé à celui-ci respectivement un canal à vapeur et/ou à fluide (17 ; 18), dans lequel l'élément d'écartement (12), en particulier semblable à une grille, n'est doté ni d'une feuille ni d'une membrane, dans lequel de préférence le cadre extérieur (39) comporte sur des côtés mutuellement opposés respectivement un autre canal délimité par la structure à entretoises soudées (11), en particulier un canal à gaz inerte (20, 21), et comprend de préférence une ouverture traversante sous dépression (33a), délimitée par la structure à entretoises soudées (11), et les autres canaux ou canaux à gaz inerte (20, 21) sont respectivement séparés de la zone intérieure centrale (40).

11. Système d'écoulement modulaire selon l'une des revendications précédentes,
**caractérisé en ce qu'**il inclut au moins un élément de cadre (10₅) d'un cinquième type, qui comporte sur un premier et sur un second côté opposé à celui-ci respectivement un canal à vapeur et/ou à fluide (17 ; 18) et une ouverture traversante à vapeur et/ou à fluide (23) qui relie le canal à vapeur et/ou à fluide (17) sur le premier côté avec la zone intérieure centrale (40) et dans lequel, en particulier pour former une chambre à vapeur ou à fluide (29), une membrane étanche à l'eau et perméable à la vapeur (26) est agencée respectivement des deux côtés de l'élément d'écartement (12), en particulier semblable à une grille, à l'intérieur de la structure à entretoises soudées (11), de telle manière que les ouvertures traversantes (13 à 16) restent dégagées, dans lequel de préférence le cadre extérieur (39) comporte en particulier une ouverture traversante sous dépression (33a) délimitée par la structure à entretoises soudées (11) et sur des côtés mutuellement opposés respectivement un canal à gaz inerte (20, 21) délimité par la structure à entretoises soudées (11), et ces canaux à gaz inerte (20, 21) sont respectivement séparés de la zone intérieure centrale (40) et dans lequel les ouvertures traversantes (13 à 16) comprennent au moins deux premières ouvertures traversantes (14, 15) et au moins deux autres ouvertures traversantes (13, 16), et la structure à entretoises soudées (11) est pourvue de pièces partielles d'entretoises soudées (11a, 11b) supplémentaires, afin de délimiter les premières ouvertures traversantes (14, 15) par rapport aux autres ouvertures traversantes (13, 16).

12. Système d'écoulement modulaire selon l'une des revendications précédentes,
**caractérisé en ce qu'**il inclut au moins un élément de cadre (10₆) d'un sixième type, qui comporte sur un premier et sur un second côté opposé à celui-ci respectivement un canal à vapeur et/ou à fluide (17 ; 18), dans lequel une feuille (27) est agencée respectivement sur les deux côtés de l'élément d'écartement (12), en particulier analogue à une grille, à l'intérieur de la structure à entretoises soudées (11) de telle manière que les ouvertures traversantes (13 à 16) restent dégagées, dans lequel de préférence le cadre extérieur (39) comporte une ouverture traversante sous dépression (33a) délimitée en particulier par la structure à entretoises soudées (11), et sur des côtés mutuellement opposés respectivement un autre canal, en particulier un canal à gaz inerte (20, 21) délimité par la structure à entretoises soudées (11), et ces autres canaux ou canaux à gaz inerte (20, 21) sont respectivement séparés de la zone intérieure centrale (40), dans lequel les ouvertures traversantes (13 à 16) comprennent au moins deux premières ouvertures traversantes (14, 16) et au moins deux autres ouvertures traversantes (13, 16), la structure à entretoises soudées (11) est pourvue de pièces partielles d'entretoises soudées (11a, 11b) supplémentaires afin de délimiter les premières ouvertures traversantes (14, 15) par rapport aux autres ouvertures traversantes (13, 16), et le cadre extérieur (39) est pourvu d'interruptions (14a, 15a) formant des ouvertures traversantes via lesquelles la chambre à vapeur ou à fluide (29) délimitée par les feuilles (27) est reliée avec les premières ouvertures traversantes (14, 15).

13. Système d'écoulement modulaire selon l'une des revendications précédentes,
**caractérisé en ce qu'**un empilement qui inclut plusieurs éléments de cadre (10₁ à 10₆) regroupés par soudage, est relié, en particulier soudés, à ses deux extrémités respectivement à une plaque de couverture (31, 31') comportant des ouvertures de raccordement (41, 42), dans lequel de préférence l'une au moins des deux plaques de couverture (31, 31') est pourvue d'un raccord à dépression (33).

14. Système d'écoulement modulaire selon la revendication 12 ou 13,
**caractérisé en ce que** l'une au moins des deux plaques de couverture (31, 31') est pourvue d'un joint à dépression (32) agencé de manière à entourer les ouvertures de raccordement (41, 42) et au niveau de la bordure du couvercle.

15. Système d'écoulement modulaire selon l'une des revendications précédentes,
**caractérisé en ce que**, pour réaliser un étage de distillation à membrane (35) il est prévu un empilement incluant au moins deux, et en particulier au moins 10 éléments de cadre, dans lequel sont contenus alternativement des éléments de cadre (10₁, 10₂) du premier et du second type, **en ce que** pour réaliser un générateur de vapeur (36) il est prévu un empilement qui inclut au moins deux et en particulier au moins 10 éléments de cadre, dans lequel sont contenus alternativement des éléments de cadre (10₂, 10₄) du second et du quatrième type, **en ce que** pour réaliser un condenseur (37) il est prévu un empilement incluant au moins deux et en particulier au moins 10 éléments de cadre, dans lequel son contenus alternativement des éléments de cadre (10₁, 10₄) du premier et du quatrième type, **en ce que** pour réaliser un échangeur de chaleur (38) il est prévu un empilement incluant au moins deux et en particulier au moins 10 éléments de cadre, dans lequel sont contenus alternativement des éléments de cadre (103, 104) du troisième et du quatrième type, **en ce que** pour réaliser un filtre il est prévu un empilement incluant plusieurs éléments de cadre, dans lequel sont contenus alternativement des éléments de cadre (103, 104) du troisième et du quatrième type, dotés respectivement de membranes de filtre sur les deux côtés, et/ou **en ce que** pour réaliser un étage de pervaporation, il est prévu un empilement incluant plusieurs éléments de cadre dans lequel sont contenus alternativement des éléments de cadre doté des deux côtés de membranes de pervaporation (26) et des deux côtés de feuilles (27), en particulier des éléments de cadre (105, 106) du cinquième et du sixième type.
